(19) **Europäisches Patentamt**
**European Patent Office**
**Office européen des brevets**

(11) **EP 3 472 989 B1**

(12) **EUROPEAN PATENT SPECIFICATION**

(45) Date of publication and mention
of the grant of the patent:
**26.05.2021 Bulletin 2021/21**

(51) Int Cl.:
*H04L 27/227* *(2006.01)*    *H04L 27/18* *(2006.01)*
*H04L 27/20* *(2006.01)*

(21) Application number: **16731130.7**

(22) Date of filing: **21.06.2016**

(86) International application number:
**PCT/EP2016/064258**

(87) International publication number:
**WO 2017/220126 (28.12.2017 Gazette 2017/52)**

(54) **METHOD FOR MODULATING AND DEMODULATING PSK SIGNALS AND DEMODULATOR THEREOF**

VERFAHREN ZUR MODULATION UND DEMODULATION VON PSK-SIGNALEN UND DEMODULATOR DAFÜR

PROCÉDÉ DE MODULATION ET DE DÉMODULATION DE SIGNAUX PSK ET DÉMODULATEUR ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.04.2019 Bulletin 2019/17**

(73) Proprietor: **Institut De Fisica D'altes Energies (IFAE)**
**08193 Bellaterra (Barcelona) (ES)**

(72) Inventor: **MACÍAS MONTERO, José, Gabriel**
**08193 Bellaterra (Barcelona) (ES)**

(74) Representative: **Herrero & Asociados, S.L.**
**Cedaceros, 1**
**28014 Madrid (ES)**

(56) References cited:
- **LOPEZ-VILLEGAS J M ET AL: "BPSK TO ASK SIGNAL CONVERSION USING INJECTION-LOCKED OSCILLATORS-PART I: THEORY", IEEE TRANSACTIONS ON MICROWAVE THEORY AND TECHNIQUES, IEEE SERVICE CENTER, PISCATAWAY, NJ, US, vol. 53, no. 12, 1 December 2005 (2005-12-01), pages 3757-3766, XP001240888, ISSN: 0018-9480, DOI: 10.1109/TMTT.2005.859875**
- **HAN YAN ET AL: "An Ultra-Low-Power BPSK Receiver and Demodulator Based on Injection-Locked Oscillators", IEEE TRANSACTIONS ON MICROWAVE THEORY AND TECHNIQUES, IEEE SERVICE CENTER, PISCATAWAY, NJ, US, vol. 59, no. 5, 1 May 2011 (2011-05-01), pages 1339-1349, XP011477188, ISSN: 0018-9480, DOI: 10.1109/TMTT.2011.2116037**
- **SHENGXI DIAO ET AL: "A 50-Mb/s CMOS QPSK/O-QPSK Transmitter Employing Injection Locking for Direct Modulation", IEEE TRANSACTIONS ON MICROWAVE THEORY AND TECHNIQUES, IEEE SERVICE CENTER, PISCATAWAY, NJ, US, vol. 60, no. 1, 1 January 2012 (2012-01-01), pages 120-130, XP011391041, ISSN: 0018-9480, DOI: 10.1109/TMTT.2011.2174377**

EP 3 472 989 B1

**Description**

**Field of the invention**

The present invention has its application within the telecommunication sector, especially, deals with the field of phase shift keying (PSK) demodulators used in communications. More particularly, the present invention refers to a method of modulation/demodulation of PSK, more particularly, Binary PSK (BPSK) and Quadrature PSK (QPSK) signals, and a PSK demodulator which applies the method to extract twice the number of bits of information than a conventional demodulator is capable of.

**Background of the invention**

Communications over radio or any transmitting media use information codification by modulating one or more magnitudes of a carrier signal with the information from the original message. Originally, there are three magnitudes of a carrier signal that can be modulated: its amplitude, its phase, and its frequency.

For digital communications, amplitude modulation is known as amplitude shift keying modulation (ASK) and it can be performed in two flavours: amplitude modulation with a modulation index equal to one, which is the simplest form of ASK and also known as On / Off keying (OOK), or amplitude modulation with a modulation index smaller than one known as ASK. In analog communications, amplitude modulation is known as AM modulation.

Phase and frequency modulations are intrinsically correlated in analog communications being frequency modulation (FM) the most common one. In the digital domain, phase and frequency modulations are well differentiated such as phase shift keying (PSK) and frequency shift keying (FSK) modulation and use different modulation and demodulation architectures.

In the case of PSK, different types of modulations can be found in the market depending on the number of phase states which the polar diagram is divided into, i.e., how many different phases can the carrier signal have. For two states, the PSK is also called Binary PSK or BPSK. In case of four states, the sum of two perpendicular BPSK signals is used and so it is called QPSK or Quadrature PSK. More complex modulations such as 8-PSK or 64-PSK are rarely used due to the poorer signal to noise ratio and the complexity of the modulator and demodulator schemes.

A simple way the modulation of BPSK signals is accomplished is by multiplying a carrier waveform by the modulating message. This is the most common modulation scheme for BPSK signals due to its simplicity. Nevertheless, there are two more schemes available to obtain BPSK modulation. Both of them are known as constant envelope schemes since the amplitude of the waveform keeps constant and only the frequency/phase of the signal is modified. The phase of a BPSK signal can be changed if the frequency of the signal is increased or decreased during a limited time.

For a phase change of N degree the "transit" time of the modulation depends on the frequency shift and the desired phase change N as follows:

$$t_{transit} = N / (2 \cdot pi \cdot f_{shift})$$

For BPSK, $t_{transit} = 1/(2 \cdot f_{shift})$. Note that the transit time is valid for both methods, i.e., increasing or decreasing the phase/frequency of the carrier. The bandwidth of the obtained modulated signal increases inversely with the transit time used for the phase change independently of the modulation scheme. Therefore, smoothed phase changes are preferred in standard communication systems with multi-user capacity.

In the case of direct multiplication BPSK, the bandwidth of the modulated carrier depends on the bit period of the modulation and the transit time $t_{transit}$. Note that for shorter transit times, the changes in the amplitude of the carrier might be unnoticeable for the receiver, but as a consequence, the bandwidth increases dramatically. Since the frequency spectrum is regulated, the bandwidth of BPSK signals must fit within the limits of the local regulations. Commonly, to accomplish such bandwidth limitations a low-pass filter is applied to the baseband signal, such as the transitions are much smoother while the transit time keeps short enough.

In the case of constant envelope BPSK, the transient time $t_{transit}$ is fixed by the frequency shift $f_{shift}$. Therefore, the bandwidth of the modulated signal depends on the bit period and the frequency shift applied.

Another fundamental parameter to optimize when selecting the modulation scheme is the signal to noise ratio (SNR) available with the modulation. Having provided a synchronous receiver, BPSK and QPSK modulations offer the highest noise immunity among all the digital modulations available. Note that the SNR from QPSK is identical of BPSK's one, since it is obtained as a linear combination of two perpendicular BPSK signals.

Since all known modulators use one of the three modulation schemes (transition techniques: a) direct multiplication, b) constant envelope with positive frequency shift $f_{shift}$, c) constant envelope with negative frequency shift $f_{shift}$) mentioned above, they only transmit a single bit of information every bit transition, independently of the used scheme.

Therefore, all existing BPSK demodulators have a common disadvantage: once they are connected to a BPSK signal, they can only demodulate 1-bit of information independently if the BPSK is obtained with direct multiplication, constant envelope with positive $f_{shift}$, or constant envelope with negative $f_{shift}$.

There are two main arquitectures of synchronous BPSK demodulators in the literature and the market: the square loop demodulator and the Costas loop demodulator. They both make use of a phase synchronization scheme, since the phase of the carrier signal might suffer low frequency phase shifts. (i.e., transmitter/receiver distance/speed changes, channel media refraction index changes due to different temperatures, etc.)

There are BPSK demodulators based on injection-locked oscillators, such as the ones described in US 2006/0193401 and US 2006/0023809, but this kind of BPSK demodulators existing so far is only able to demodulate 1-bit BPSK signals.

LOPEZ-VILLEGAS J M ET AL: "BPSK TO ASK SIGNAL CONVERSION USING INJECTION-LOCKED OSCILLATORS-PART I: THEORY",IEEE TRANSACTIONS ON MICROWAVE THEORY AND TECHNIQUES, considers the application of Injection Locked Oscillators to BPSK/QPSK modulation/demodulation, and has recognized the different behaviours during the phase transition period.

The demodulator disclosed in US 2006/0193401 injects a BPSK signal having in an injection locking oscillator (ILO), which provides differential output (Op, On) signals that are combined with a copy of the incoming BPSK signal in order to generate a demodulated signal. This way, the carrier recovery is accomplished by means of super harmonic injection locking of an oscillator, without the need of external feedback path. As a consequence, no loop filter is required and then the resulting architecture is suitable for monolithic integration.

The system proposed by US 2006/0023809 has an output stage with inputs connected to a plurality of argument/frequency dividers outputs, alternatively to using a power combiner, the output stage being adapted to isolate said argument/frequency dividers outputs and avoid mutual locking between them. Said argument/frequency dividers are injected locked oscillators (ILOs).

However, all the available BPSK demodulators are only able to detect just one single bit of information: such as '0' as no phase change or '1' as phase change of 180 degree independently the transition scheme used originally in the BPSK modulator. Note that every time that the phase changes in the input BPSK signal, the phase of the carrier increases or decreases 180 degree. Hence, the current BPSK demodulators are not able to detect which method was used for the phase change.

Therefore, there is a need in the state of the art for the optimization of the BPSK demodulators in order to achieve an increasing in the signal to noise ratio (SNR) and/or in the transmission data rate or a reduction of the spectrum bandwidth required to modulate/demodulate at a given transmission data rate.

**Summary of the invention**

The present invention solves the aforementioned problem and overcomes previously explained state-of-art work limitations by providing a method for modulating and encoding 2-bits of information into a single BPSK signal and a device for demodulating the BPSK signal and decoding the 2-bits of information. The demodulator can obtain 2-bits of information with the same single BPSK signal since it is able to differentiate which one of the three possible transition techniques was used in the modulated (input) BPSK signal:

    a) direct multiplication, or
    b) constant envelope with positive frequency shift, or
    c) constant envelope with negative frequency shift.

The present invention uses all these three transition techniques to change the phase of a carrier 180 degree as follows:

    i) maintaining the frequency of the carrier in a direct multiplication with a bipolar unity signal (-1, 1),
    ii) increasing the frequency of the signal by factor $\Delta f$ during a transit time of $1/(2*\Delta f)$, for a constant envelope with positive frequency shift; or,
    iii) decreasing the frequency of the carrier by the same $\Delta f$ and the same transit time $1/(2*\Delta f)$, for constant envelope with negative frequency shift.

The present invention uses a binary coding scheme for modulation based on using all the three transition techniques to change the phase of the carrier 180 degree depending on the original message of 2 bits. The modulator evaluates the original symbol of two bits and changes the phase of the carrier at every symbol period according to the transition technique (a, b, or c) established on a codification table.

The application of the present invention is basically in communications systems using BPSK signals, either wired or wireless communications. Among some applications are: naval and aerial communications and satellite video broadcasting. Furthermore, the present invention can also be applied to QPSK signals by adding a second demodulator working in quadrature. Therefore, the method for demodulating the QPSK signal could obtain 4-bits of information with every symbol.

The method and demodulator in accordance with the above described aspects of the invention have a number of advantages with respect to prior art, which derive from obtaining 1-bits of information extra and can be summarized as follows:

- Increasing the signal to noise ratio while keeping the same signal power and bandwidth
- Doubling the data rate using the same bandwidth and signal power
- Reducing the spectrum bandwidth for the same data rate so that the number of users in a single channel can be increased.

These and other advantages will be apparent in the light of the detailed description of the invention.

## Description of the drawings

For the purpose of aiding the understanding of the characteristics of the invention, according to a preferred practical embodiment thereof and in order to complement this description, the following figures are attached as an integral part thereof, having an illustrative and non-limiting character:

Figure 1 shows a block diagram of a BPSK demodulator, according to a preferred embodiment of the invention.
Figure 2 shows different regions of a BPSK modulated signal in the case that direct multiplication is used for modulation.
Figure 3 shows a graphic of the output phase evolution in an ILO of the BPSK demodulator in the case that direct multiplication is used for modulation.
Figure 4 shows a detailed waveform of the BPSK modulated signal and its different regions in the case that constant envelope with positive (b) and negative (c) frequency shifts are used for modulation.
Figure 5 shows a graphic of the output phase evolution in an ILO of the BPSK demodulator in the case that constant envelope with positive frequency shift is used for modulation.
Figure 6 shows a graphic of the output phase evolution in an ILO of the BPSK demodulator in the case that constant envelope with negative frequency shift is used for modulation.
Figure 7 shows a graphical representation of the normalized bifurcation time versus the initial output phase in an ILO of the BPSK demodulator for two cases, direct multiplication and constant envelope with negative frequency shift.
Figure 8 shows bifurcation working areas of the different ILOs of the BPSK demodulator.
Figure 9 shows bifurcation working areas of the different ILOs of the BPSK demodulator, in a real simulation case.
Figure 10 shows bifurcation working areas of the ILOs for different transition times.
Figure 11 shows simulation waveforms of the output signals of the BPSK demodulator, in a real simulation case.
Figure 12 shows a block diagram of a BPSK demodulator with an extra mixer, according to another possible embodiment of the invention.
Figure 13 shows a block diagram of a QPSK modulator, according to a possible embodiment of the invention.
Figure 14 shows a block diagram of a QPSK demodulator, according to a preferred embodiment of the invention.

## Preferred embodiment of the invention

A possible embodiment of the invention is a method for modulating and demodulating BPSK signals. The modulation is based on using all the three transition techniques to change the phase of the carrier 180 degree depending on the original message of 2 bits. The original symbol of two bits is evaluated and the phase of the carrier is changed at every symbol period according to the transition technique established on a codification table. Table 1 is an example of look up table of the transition technique for encoding:

**Table 1**

| 00 | No phase change |
| --- | --- |
| 01 | Direct multiplication |
| 10 | Constant Envelope - Positive frequency shift |
| 11 | Constant Envelope - Negative frequency shift |

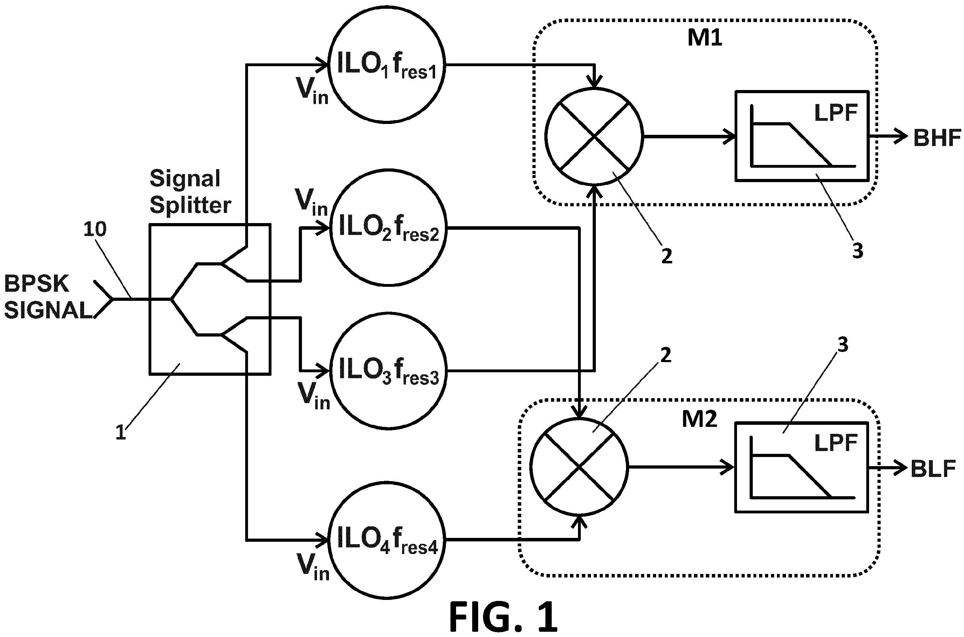

Figure 1 shows a block diagram of a two-bit demodulator with the minimum number of components to decode and demodulate BPSK signals encoded and modulated taking into account the three possible transition techniques. The architecture of this BPSK demodulator is based on a signal splitter (1), which can be a power splitter or a voltage fan out circuit, from one input to four outputs, and four second-harmonic injection-locked oscillators (ILO$_1$, ILO$_2$, ILO$_3$, ILO$_4$) with different self resonant frequencies (f$_{res1}$, f$_{res2}$, f$_{res3}$, f$_{res4}$) respectively. The second harmonic ILOs or injection-locked oscillators (ILO$_1$, ILO$_2$, ILO$_3$, ILO$_4$) can be implemented by magnetic-electric resonant tank, i.e., LC-oscillators, or by relaxation oscillators, i.e., RC and ring oscillators. This BPSK demodulator further comprises two down-conversion mixers (M1, M2), each one composed of a mixer (2) and a low-pass filter (3), which delivers respectively a first output signal (BHF), which corresponds to a high frequency bandwidth, and a second output signal (BLF) which corresponds to a low frequency bandwidth, both as the outputs of the BPSK demodulator.

The BPSK-modulated carrier, BPSK signal (10), is injected into the BPSK demodulator and, through the signal splitter (1), is split into every injection-locked oscillator as input signal, denoted as V$_{in}$, which can be expressed as:

$$V_{in} = A_{in}(t) \cdot \sin[2 \cdot \pi \cdot f_{in} \cdot t + \Psi(t)] \qquad \text{(equation 1)}$$

where:

A$_{in}$(t) is the amplitude of the BPSK signal (10), which can be a function of time such as the case of direct multiplication;
f$_{in}$ is the input frequency of the BPSK signal (10), and
$\Psi$(t) is the phase of the BPSK signal (10), which can be a function of time such as the cases of constant envelope.

In absence of injected BPSK signal (10), every second harmonic injection-locked oscillator (ILO$_1$, ILO$_2$, ILO$_3$, ILO$_4$) has an output voltage described by V$_{out}$ as follows:

$$V_{out} = A_{out} \cdot \sin(2 \cdot \pi \cdot f_{res} \cdot t + \Phi) \qquad \text{(equation 2)}$$

where:

A$_{out}$ is the amplitude of output voltage of the oscillator,
f$_{res}$ is the self-resonant frequency of the oscillator,
and $\Phi$ is the instant phase of the oscillator at t=0.

The basic principle of the behavior of second harmonic injection-locked oscillators (ILO$_1$, ILO$_2$, ILO$_3$, ILO$_4$) is based in the synchronization of the oscillator's frequency f$_{res}$ and phase $\Phi$ to one half of the frequency f$_{in}$ and phase $\Psi$(t) of the injected BPSK signal (10) once locking is established. Therefore, for an input signal V$_{in}$ such as:

$$V_{in} = A_{in}(t) * \sin[2 * pi * (2 * f_{lock}) * t + \Psi(t)] \qquad \text{(equation 3)}$$

the output voltage of the oscillator at any moment can be rewritten as:

$$V_{out} = A_{out}(t) \cdot \sin[2 \cdot \pi \cdot f_{lock} \cdot t + \Phi(t)] \qquad . \qquad \text{(equation 4)}$$

where f$_{lock}$ is the desired frequency at the locked state.

The differential equation governing the behavior of the phase of the oscillator is:

$$d\Theta(t)/dt = 4 \cdot \pi \cdot (f_{res} - f_{lock}) - \pi \cdot f_{res} \cdot \alpha \cdot A_{in}(t) \cdot \sin(\Theta(t)) \qquad \text{(equation 5)}$$

where $\Theta$(t) is defined by $2 \cdot \Phi(t) - \Psi(t) + \pi/2$, and $\alpha$ is a constant proportional to the tuning range of the oscillator. In the working principle of the BPSK demodulator, the self-resonant frequency f$_{res1..4}$ of all oscillators (ILO$_1$, ILO$_2$, ILO$_3$, ILO$_4$) must differ from the locking frequency by a frequency offset defined by f$_{off1..4}$ = f$_{res1..4}$ - f$_{lock}$. In such situation, the input signal V$_{in}$ must have sufficient amplitude A$_{in}$(t) to reach steady conditions every phase change of 180 degree at the input.

In the present embodiment of the invention, the first assumption of operation of the 2-Bit BPSK demodulator is that all the oscillators (ILO$_1$, ILO$_2$, ILO$_3$, ILO$_4$) are locked to the injected signal (10) in stationary conditions, i.e., in absence of bit changes. The biasing conditions in this case are represented by the frequency offset $f_{off1..4}$, since it is assumed that the amplitude of the input signal $V_{in}$ and the tuning range are equal in all the ILOs ($ILO_1$, $ILO_2$, $ILO_3$, $ILO_4$).

The steady conditions are reached when $d\Theta(t)/dt = 0$. In such situation, the steady phases $\Theta_s$ and $\Theta_m$ are given by:

$$\Theta_s = \arcsin\left[(4/(\alpha \cdot A_{in})) \cdot (f_{res} - f_{lock})/f_{res}\right]$$

(equation 6)

$$\Theta_m = \pi - \Theta_s$$

(equation 7)

Depending on the sign of the frequency offset $f_{res} - f_{lock}$, and the sign of $\alpha$, $\Theta_s$ is the stable steady state and $\Theta_m$ the metastable state, or vice versa. Note that $\Phi_s$ tends to zero for bigger amplitudes and smaller frequency offsets.

Second harmonic ILOs have a characteristic time $\tau$ that represents the time to reach phase locking when the self-resonant frequency of the oscillator is equal to the desired locking frequency. This time depends on the amplitude $A_{in}$ of the input signal and the self-resonant frequency as follows:

$$\tau = 1/(\pi \cdot f_{res} \cdot \alpha \cdot A_{in}) \qquad \text{(equation 8)}$$

The self-resonant frequencies $f_{res1..4}$ of the oscillators ($ILO_1$, $ILO_2$, $ILO_3$, $ILO_4$) are placed at certain frequency offset from $f_{lock}$ such as follows:

$$f_{res1} = f_{lock} + f_{off1} = f_{lock} + \Delta f_2$$

$$f_{res2} = f_{lock} + f_{off2} = f_{lock} + \Delta f_1$$

$$f_{res3} = f_{lock} + f_{off3} = f_{lock} - \Delta f_1$$

$$f_{res4} = f_{lock} + f_{off4} = f_{lock} - \Delta f_2$$

where, due to the symmetry of the system, $\Delta f_2$ and $\Delta f_1$ can be positive or negative and $\Delta f_2 > \Delta f_1$ or $\Delta f_2 < \Delta f_1$.

At these self-resonant frequencies, the stable solution and the characteristic time of every ILO can be expressed as $\theta_{S1}$, $\theta_{S2}$, $\theta_{S3}$, $\theta_{S4}$, and $\tau_1$, $\tau_2$, $\tau_3$, $\tau_4$ respectively. Note that at first order of approximation $\theta_{S2} = -\theta_{S3}$ and $\theta_{S1} = -\theta_{S4}$ due to the symmetry of the system.

Originally, in absence of bit changes, all oscillators ($ILO_1$, $ILO_2$, $ILO_3$, $ILO_4$) are locked to the injected signal (10). The output phase of every oscillator $\theta_{S1}$, $\theta_{S2}$, $\theta_{S3}$, and $\theta_{S4}$ is given by:

$$\Phi_{S1} = \tfrac{1}{2} \cdot (\Psi_0 - \theta_{S1} - \pi/2)$$

$$\Phi_{S2} = \tfrac{1}{2} \cdot (\Psi_0 - \theta_{S2} - \pi/2)$$

$$\Phi_{S3} = \tfrac{1}{2} \cdot (\Psi_0 - \theta_{S3} - \pi/2)$$

$$\Phi_{S4} = \tfrac{1}{2} \cdot (\Psi_0 - \theta_{S4} - \pi/2)$$

Note that phase differences among oscillators ($ILO_1$, $ILO_2$, $ILO_3$, $ILO_4$) only depend on the frequency offsets $\Delta f_1$ and $\Delta f_2$ represented by $\theta_S$.

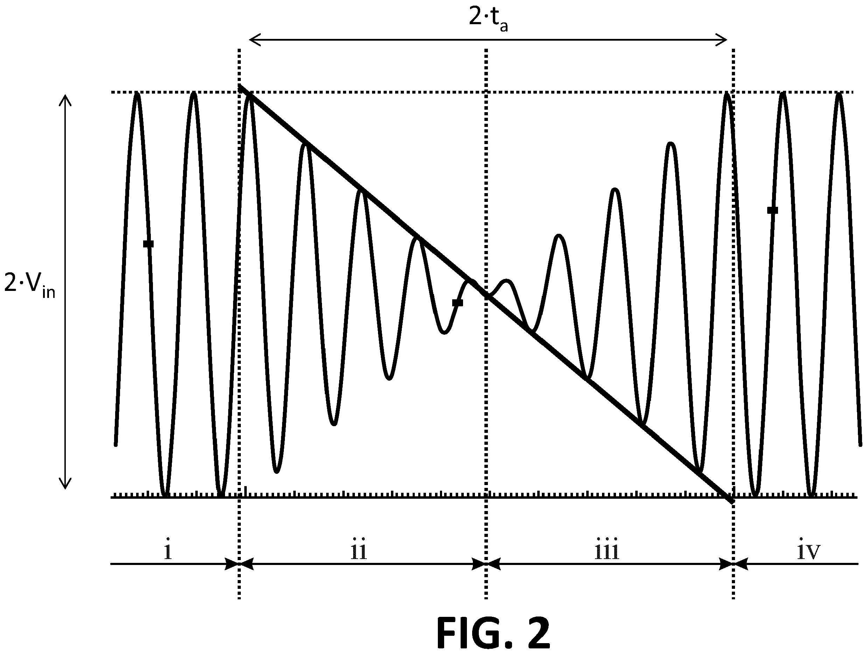

The following Figures 2-6 analyze the behavior of $\theta(t)$ when a bit change happens at the injected signal following one of the three transition techniques:

 a/ Constant frequency or direct multiplication -modulation or conversion-,
 b/ Constant envelope with positive frequency shift, and
 c/ Constant envelope with negative frequency shift.

Depending upon the transition technique, the bit transition of the BPSK signal (10) is modeled by the following set of equations:

I.- Case a/ (Direct Conversion)

The amplitude of the modulated carrier can be expressed as:

$$A(t) = A_{in} \cdot (1 - t/t_a) \text{ for } t \in [0, t_a]$$

$$A(t) = A_{in} \cdot (t/t_a - 1) \text{ for } t \in [t_a, 2 \cdot t_a] \qquad \text{(equation 9)}$$

where $2 \cdot t_a$ represents the bit transition period when the transition techique of Direct Conversion, case a/, is used, and $A_{in}$ the original amplitude of the carrier. Note that this model is a first order approximation of actual direct conversion BPSK where "root-raise cosine-type" filters are applied to the amplitude modulator to reduce the bandwidth of the modulated carrier and comply with the spectrum regulation.

Figure 2 shows the detailed waveform of case a/ with illustration of four different regions (i, ii, iii, iv) of the BPSK-modulated signal (10). In Region i, the ILO is locked to the injected signal without bit change as assumed above. In regions ii and iii, the amplitude $A_{in}$ of the input signal decreases and increases according to equation 9.

The oscillator ILO departs from a stable phase represented by $\theta_S$ and evolves according to the following differential equations:

$$d\theta_{ii}(t)/dt = 4 \cdot \pi \cdot \Delta f - \pi \cdot f_{res} \cdot \alpha \cdot A_{IN} \cdot (1-t/t_a) \cdot \sin(\theta_{ii}(t)) \qquad \text{(equation 10)}$$

in the domain from t=0 to $t=t_a$ and the initial condition $\theta_{ii}(0)=\theta_S$, and

$$d\theta_{iii}(t)/dt = 4 \cdot \pi \cdot \Delta f - \pi \cdot f_{res} \cdot \alpha \cdot A_{IN} \cdot (t/t_a - 1) \cdot \sin(\theta_{iii}(t)) \qquad \text{(equation 11)}$$

in the domain from $t=t_a$ to $t=2 \cdot t_a$ and the initial condition $\theta_{iii}(t_a)=\theta_{ii}(t_a)$.

On region iv, the injected signal (10) has reached completely again the amplitude $A_{in}$ and has changed the phase 180 degree. The differential equation of $\theta_{iv}(t)$ is given by:

$$d\theta_{iv}(t)/dt = 4 \cdot \pi \cdot \Delta f - \pi \cdot f_{res} \cdot \alpha \cdot A_{IN} \cdot \sin(\theta_{iv}(t)) \qquad \text{(equation 12)}$$

with an integration domain from $t=2 \cdot t_a$ to $\infty$ and the initial condition $\theta_{iv}(2 \cdot t_a)=\theta_{iii}(2 \cdot t_a)$.

The system of the aforementioned differential equations 10-12 can be solved numerically. The evolution of the output phase of the ILO follows the equations:

$$\Delta\Phi(t) = \frac{1}{2} \cdot (\theta_{ii}(t) - \theta_S), \qquad 0 \leq t \leq t_a$$

$$\Delta\Phi(t) = \frac{1}{2} \cdot (\theta_{iii}(t) - \theta_S - \pi), \qquad t_a \leq t \leq 2 \cdot t_a$$

$$\Delta\Phi(t) = \frac{1}{2} \cdot (\theta_{iv}(t) - \theta_S - \pi), \qquad t \geq 2 \cdot t_a$$

It is clear that in region iv, the oscillator will lock again to the input signal after a certain time and its phase will shift $+\pi/2$ in common operating conditions. Nevertheless, depending on the initial conditions represented by the value of $\theta_S$, and the conditions of the bit transition, i. e., the normalized time $\tau_a$, defined as $t_a/\tau$, the final phase of the oscillator

might shift either $+\pi/2$ or $-\pi/2$. For negative $\theta_S$ the phase of the oscillator will shift in opposite direction than for positive $\theta_S$.

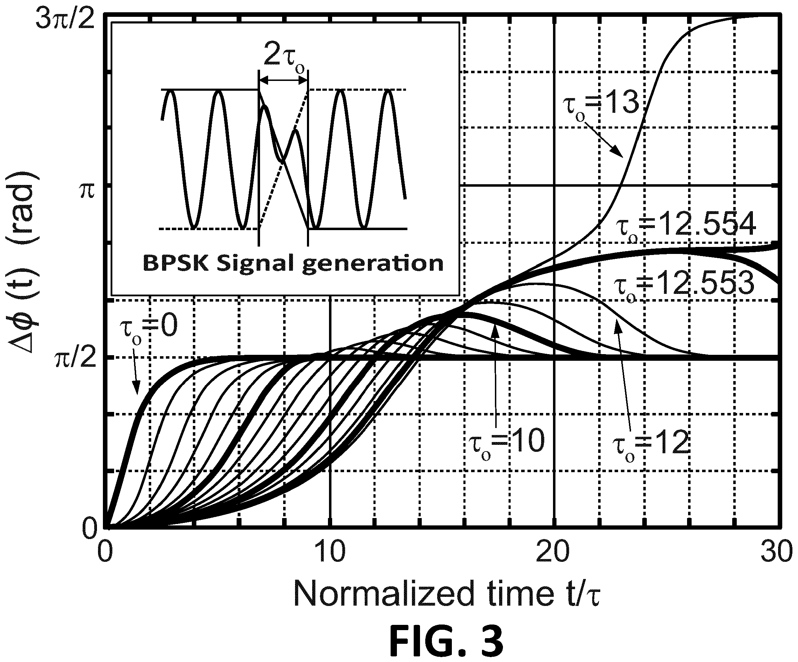

Figure 3 shows the evolution of the output phase of the ILO $\Phi(t)$ for $\theta_S = 0.6$ and different values of $\tau_0$. As we can observe, there exists a bifurcation value of $\tau_a$, called $\tau_B$, from which the evolution of $\Phi(t)$ diverges from $+\pi/2$ to $-\pi/2$.

So for every positive $\theta_S$, any bit transition with a normalized transition time $\tau_a$ below the corresponding $\tau_B$ will cause the output of the oscillator to shift $+\pi/2$. Nevertheless, for $\tau_a > \tau_B(\theta_S)$ the output shift will be negative. For negative values of $\theta_S$, the phase shift of the oscillator are inverted from positive case, so for $\tau_a < \tau_B(\theta_S)$ it will be $-\pi/2$, for $\tau_a > \tau_B(\theta_S)$ it will be $+\pi/2$.

II.- Cases b/ and c/ (Constant Envelope with positive/negative phase/frequency shift)

For constant envelope modulation, the amplitude of the modulated carrier remains $A_{in}$ and the phase of the carrier changes according to:

$$\Psi(t) = 2\cdot\pi\cdot( f_{in} + 2\cdot\Delta f)\cdot t + \Psi_0$$

where $f_{in}$ is the frequency of the carrier, $2\cdot\Delta f$ represents the frequency shift from $f_{in}$, and $\Psi_0$ is the original phase of the carrier.

For a phase change of N rad, the "transit" time of modulation b/ (positive frequency shifts) and c/ (negative frequency shifts), $2\cdot t_{b/c}$ for convenience, depends on the frequency shift and the desired phase change N as follows:

$$2\cdot t_{b/c} = N / [2\cdot pi\cdot(2\cdot\Delta f)]$$

For BPSK,

$$2\cdot t_{b/c} = 1 / (4\cdot\Delta f).$$

For convenience and realistic cases, $2\cdot t_{a/b/c}$ is considered to be much longer than the period of the carrier $1/f_{in}$, and not necessarily equal, such as the BPSK modulation using trajectory a/ (direct modulation) can be done with faster transition time than using trajectory b and c, or vice versa.

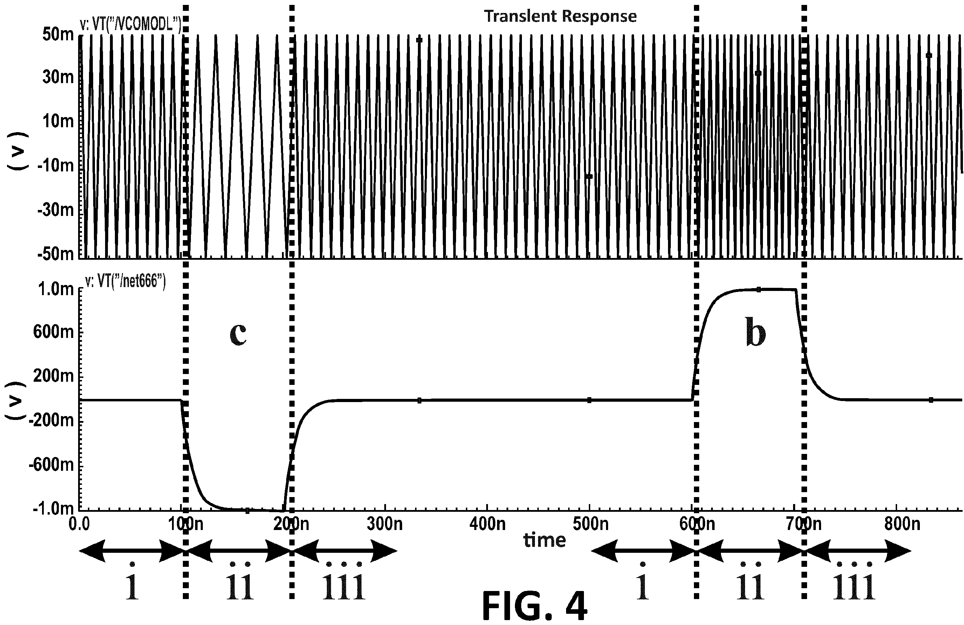

For constant envelope trajectories, b/ and c/, the frequency of the injected signal (10) jumps from $2\cdot f_{lock}$ to $2\cdot(f_{lock} + \Delta f)$ during $2\cdot t_{b/c}$ where $\Delta f$ is positive for case b and negative for case c. Figure 4 shows the detailed waveform with different regions (i, ii, iii) for both cases.

During region i, as for case a/ -direct modulation, the oscillator is locked to the input signal (10) with a steady initial phase of $\theta_S$. In region ii, the differential equation is given by:

$$d\theta_{ii}(t)/dt = 4\cdot\pi\cdot(f_{res} - f_{lock} - \Delta f) - \pi\cdot f_{res}\cdot\alpha\cdot A_{IN}\cdot\sin(\theta_{ii}(t)) \; (\text{equation } 13)$$

within the integration time from t=0 to t=$2\cdot t_{b/c}$ and with the initial condition $\theta_{ii}(0) = \theta_S$.

Once in region iii, the frequency of the injected signal (10) goes back to $2\cdot f_{lock}$, and the oscillator follows the equation:

$$d\theta_{iii}(t)/dt = 4\cdot\pi\cdot(f_{res} - f_{lock}) - \pi\cdot f_{res}\cdot\alpha\cdot A_{IN}\cdot\sin(\theta_{iii}(t)) \qquad (\text{equation } 14)$$

within the integration time from t=$2\cdot t_{b/c}$ to $\infty$ and with the initial condition $\theta_{iii}(2\cdot t_{b/c}) = \theta_{ii}(2\cdot t_{b/c})$.

The system of differential equations 13 and 14 can be solved analytically and numerically. The evolution of the output phase of the oscillator follows the equations:

$$\Delta\Phi(t) = \tfrac{1}{2}\cdot(\theta_{ii}(t) - \theta_S + 4\cdot\pi\cdot\Delta f\cdot t), \qquad 0 \leq t \leq 2\cdot t_{b/c}$$

$$\Delta\Phi(t) = \tfrac{1}{2}\cdot(\theta_{iii}(t) - \theta_S \pm \pi), \qquad t \geq 2\cdot t_{b/c}$$

where the positive sign applies for case b/ and negative sign for case c/, Constant Envelope with positive and negative phase shift respectively, if $\theta_S > 0$. For $\theta_S < 0$ the positive sign applies for case c/, negative phase shift, and negative sign for case b/, positive phase shift.

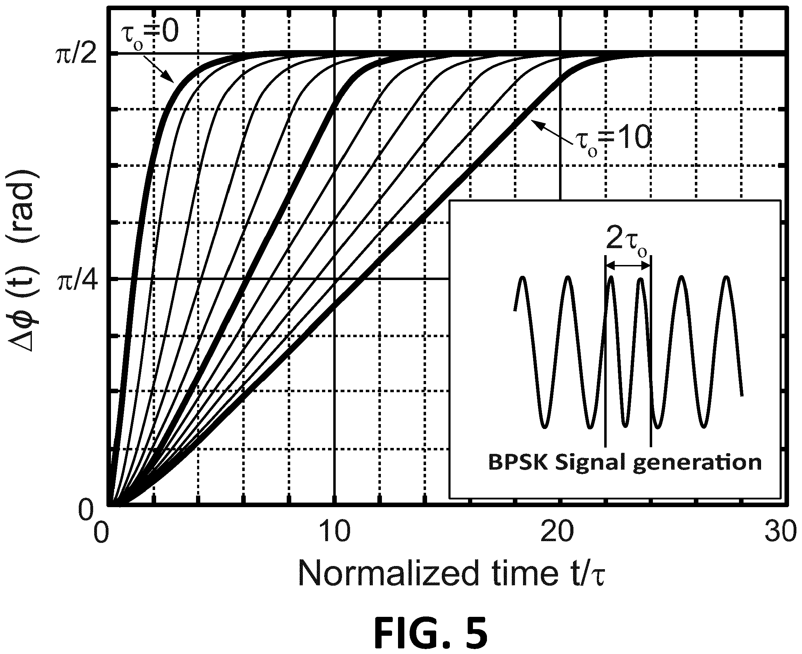

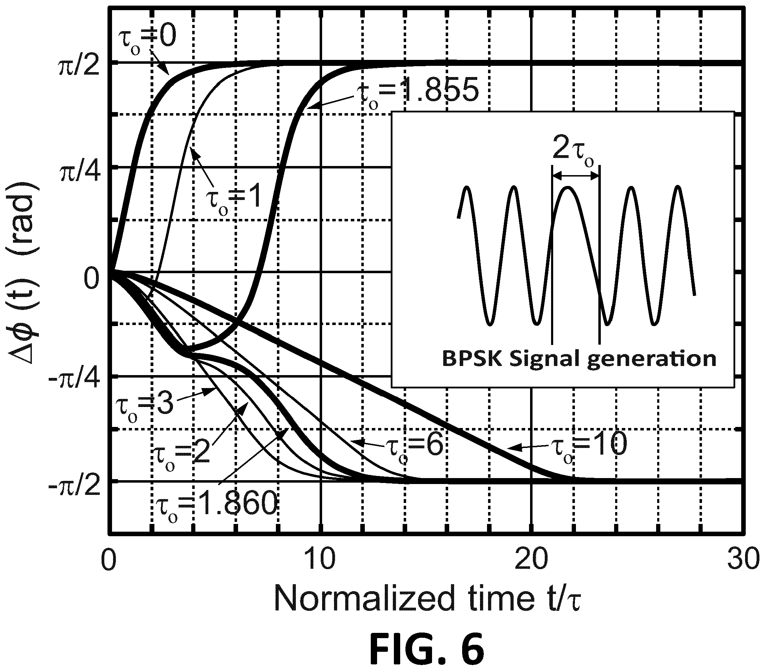

Figure 5 and Figure 6 show the evolution of the output phase of the oscillator ILO for initial steady $\theta_S = 0.6$ and different normalized transit times for case b/ and case c/ respectively. The bifurcation phenomenon happens only in the case of trajectory c/ (negative phase shift) for $\theta_S > 0$, and trajectory b/ (positive phase shift) for $\theta_S < 0$. The bifurcation time $\tau_B$, i.e., the bit transition time normalized with $\tau_{a/b/c}$ from which the bifurcation phenomenon is observed, depends on the absolute value of $\theta_S$ for trajectories a/ and c/ for $\theta_S > 0$ and for trajectories a/ and b/ for $\theta_S < 0$.

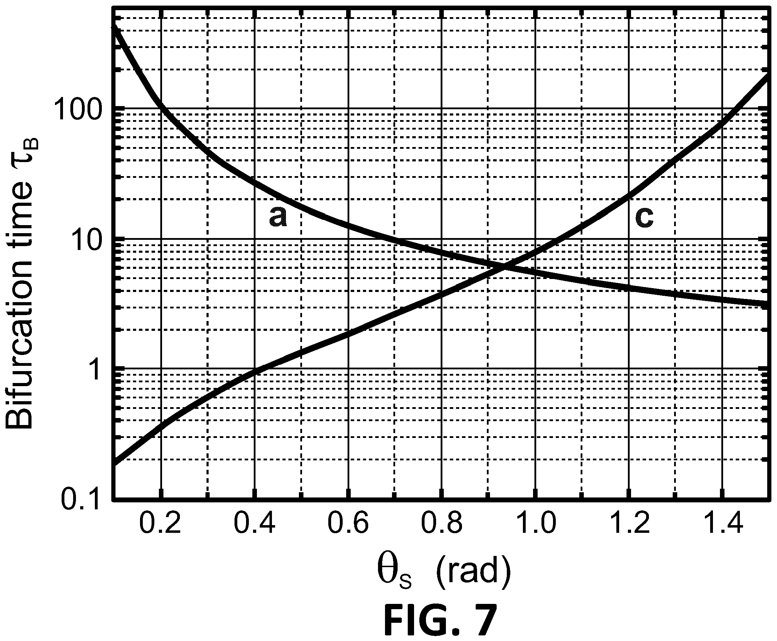

Figure 7 shows the parameters, normalized bifurcation time $\tau_B$ and the initial steady phase $\theta_S$, which determine the working conditions for all the oscillators ($ILO_1$, $ILO_2$, $ILO_3$, $ILO_4$) given a transition time $t_a$, $t_b$, and $t_c$ for every trajectory a/, b/ and c/ respectively. Some of the oscillators ($ILO_1$, $ILO_2$, $ILO_3$, $ILO_4$) can be set such as they do not suffer any bifurcation and others can be set to suffer bifurcation for trajectory c/ but not a/ or vice versa.

The working conditions of $ILO_{1,2,3,4}$ can be such as:

- $ILO_1$ and $ILO_4$ do not suffer any bifurcation, in any trajectory case, not a/, not b/, not c/; and
- $ILO_2$ suffers bifurcation with trajectory c/, constant envelope with negative phase shift, and $ILO_3$ suffers bifurcation with trajectory b/, constant envelope with positive phase shift;
- or vice versa, $ILO_2$ and $ILO_3$ taking the place of $ILO_1$ and $ILO_4$ respectively.

The aim of having four oscillators ($ILO_1$, $ILO_2$, $ILO_3$, $ILO_4$) at different frequency offset is to obtain different phase transitions in every oscillator depending on the transition technique, trajectory a/, b/ or c/, used in the input signal (10). For convenience, $f_{res1} > f_{res2} > f_{lock}$ (= $f_{IN}/2$), in such as $\theta_{S1} > \theta_{S2} > 0$, i.e., the $ILO_1$ self-resonant frequency is higher than the $ILO_2$ self-resonant frequency ($f_{res1} > f_{res2}$) and both are higher than the locking frequency, $f_{res1}$ and $f_{res2} > f_{lock}$. Additionally, $f_{res4} < f_{res3} < f_{lock}$ so $\theta_{S4} < \theta_{S3} < 0$, i.e., the $ILO_4$ self-resonant frequency is lower than the $ILO_3$ self-resonant frequency ($f_{res4} < f_{res3}$) and both are lower than the locking frequency, $f_{res4}$ and $f_{res3} < f_{lock}$.

On this way, any bit change at the BPSK signal (10) causes a phase transition $\Delta\Phi$ at every oscillator ($ILO_1$, $ILO_2$, $ILO_3$, $ILO_4$), i.e., with the aforementioned conditions, each oscillator output phase, $ILO_1$ $\Delta\Phi$, $ILO_2$ $\Delta\Phi$, $ILO_3$ $\Delta\Phi$ and $ILO_4$ $\Delta\Phi$, changes every 180 degree input phase change or transition, which is detailed in Table 2:

**Table 2**

|  | Trajectory a/ | Trajectory b/ | Trajectory c/ |
|---|---|---|---|
| $ILO_1$ $\Delta\Phi$ | +90 | +90 | +90 |
| $ILO_2$ $\Delta\Phi$ | +90 | +90 | -90 |
| $ILO_3$ $\Delta\Phi$ | -90 | +90 | -90 |
| $ILO_4$ $\Delta\Phi$ | -90 | -90 | -90 |

By multiplying $ILO_1$ and $ILO_3$ through the first down-conversion mixer (M1) and multiplying $ILO_2$ and $ILO_4$ through the second down-conversion mixer (M1), the output bits of the demodulator outputs, the high frequency output signal (BHF) and the low frequency output signal (BLF) change according to Table 3 for every input BPSK signal transition.

**Table 3**

|  | Trajectory a/ | Trajectory b/ | Trajectory c/ |
|---|---|---|---|
| BHF $\Delta$V | x (-1) | x (-1) | x (+1) |
| BLF $\Delta$V | x (-1) | x (+1) | x (-1) |

Therefore, for every bit transition, the receiver understands that:

- Trajectory a/ was used in the transition, if both output signals (BHF, BLF) change.
- If only the high frequency output signal (BHF) changed, then trajectory b/ was used.
- If only the low frequency output signal (BLF) changed, trajectory c/ was used.
- When no output phase change is observed, $\Delta\Phi = 0$, it means that there was no bit transition at the input sgnal (10).

Due to the symmetry of the system, the working conditions of the ILOs , i.e., their self resonant frequencies ($f_{res1..4}$) can be flipped upside-down such as $f_{res4} > f_{res3} > f_{lock}$ and $f_{lock} > f_{res2} > f_{res1}$. The demodulator will work in the same way by simply switching the outputs BHF and BLF.

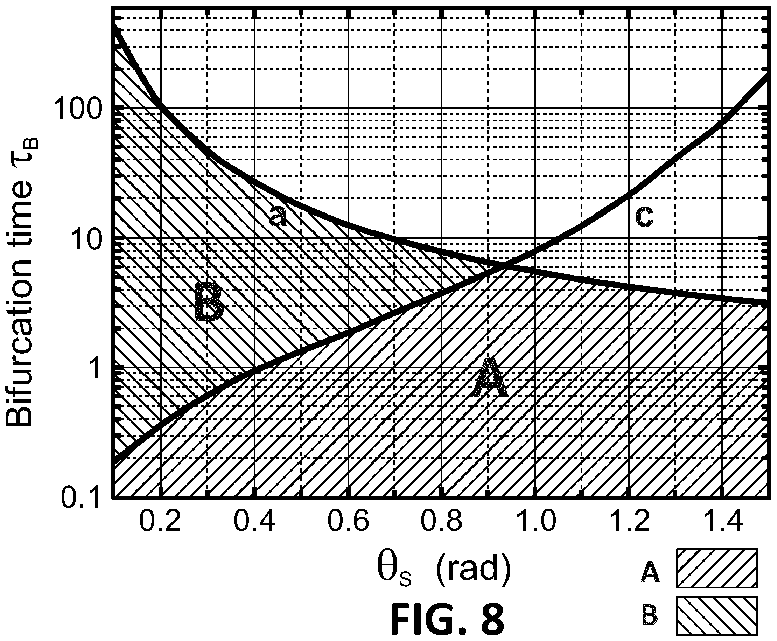

Figure 8 shows the bifurcation regions where the oscillators ($ILO_1$, $ILO_2$, $ILO_3$, $ILO_4$) work. There exist two combinations: one is that oscillators $ILO_1$ and $ILO_4$ might be working in the area A, where no bifurcation happens, and oscillators $ILO_2$ and $ILO_3$ should be working in the region B, where bifurcation for trajectory c for $ILO_2$ and for trajectory b for $ILO_3$ happen. In the second combination, regions A and B might be switched. In both combinations, the demodulator works in the same way, except in that the output signals (BHF, BLF) have to be switched.

The parameters of the 2-Bit BPSK modulation and the Injection-Locked oscillators ($ILO_1$, $ILO_2$, $ILO_3$, $ILO_4$) that can be modified are the following:

- From the modulator:

    Frequency $2 \cdot f_{lock}$ of the carrier of the BPSK signal (10)
    Transition time $t_a$ of the trajectory a/
    Transition time $t_b$ of the trajectory b/
    Transition time $t_c$ of the trajectory c/

- From the Demodulator:
    Self-resonant frequency of $ILO_{1,2,3,4}$: $f_{res1}$, $f_{res2}$, $f_{res3}$, $f_{res4}$
    Amplitude $A_{in}$ of the input signal (10)

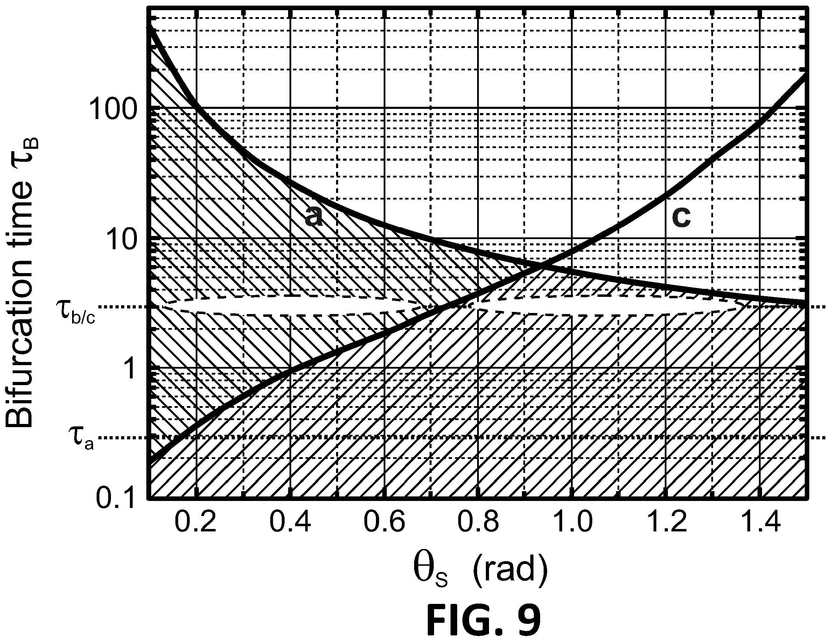

Considering $f_{res} - f_{lock} << f_{lock}$, the characteristic time of all the ILOs ($ILO_1$, $ILO_2$, $ILO_3$, $ILO_4$) can be approximately defined as $\tau = 1 / (\pi \cdot f_{lock} \cdot \alpha \cdot A_{IN})$. With this common characteristic time $\tau$, the normalized transition times $\tau_a$, $\tau_b$, and $\tau_c$, can be drawn in Figure 9, where the different Bifurcation areas of the different ILOs are shown for different example transition times.

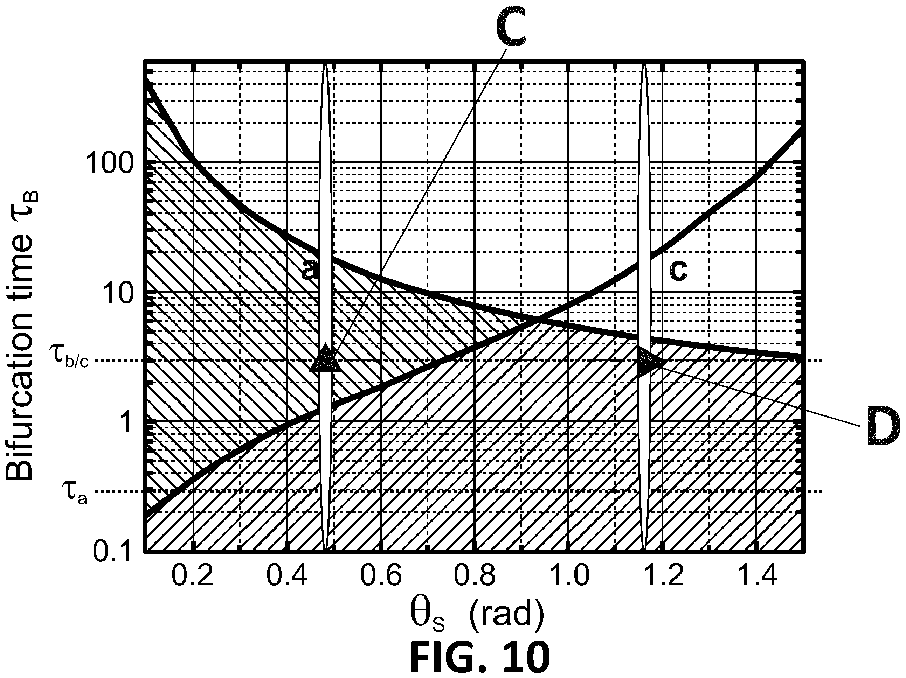

Figure 10 shows a real example where $\tau_a = 0.1 \cdot \tau_{b/c}$ and the first combination explained above was chosen. Illustrated in the bifurcation diagram, a vertical triangle C shows the position of $ILO_2$ and $ILO_3$ at 0.48 radians, and a horizontal triangle D shows the position of $ILO_1$ and $ILO_4$ at 1.17 radians. Note that for the characteristic times from Figure 10, $ILO_1$ and $ILO_4$ can be placed within the D region of the area A crossed with the $\tau_{b/c}$ line. Their respective resonant frecuencies $f_{res1}$ and $f_{res4}$ can be adjusted such as the range of the initial phase $\theta_S$ goes from 0.8 to 1.4 approximately. On the other hand, $ILO_2$ and $ILO_3$ must be placed within the C region of area B crossed by the $\tau_{b/c}$ line. On this way, the initial phase $\theta_{S2}$ of $ILO_2$ and $\theta_{S3}$ of $ILO_3$ might be placed from 0.2 to 0.7 approximately.

The parameters of the real example used in the simulation case of Figure 10 are:

    $f_{lock}$ = 434 MHz ($2 \cdot f_{lock}$ = 868 MHz, ISM Band)

    $t_a$ = 10 ns (nanoseconds)
    $t_b = t_c$ = 100 ns

    $A_{in}$ = 100 mV

    $\alpha$ = 0.2 (20 % Tuning Range at 1 V)

    $f_{res1}$ = 436 MHz
    $f_{res2}$ = 435 MHz
    $f_{res3}$ = 433 MHz
    $f_{res4}$ = 432 MHz

    $\tau = 1 / (\pi \cdot f_{lock} \cdot \alpha \cdot A_{IN}) = 5/(\pi \cdot 434M \cdot 0.1) = 37$ ns
    $\tau_a = 0.27$, $\tau_b = \tau_c = 2.7$

    $\theta_S = \arcsin(4 \cdot \Delta f / A_{IN} \cdot f_{res} \cdot \alpha)$

    $\theta_{S1} = -\theta_{S4} = \arcsin(0.92) = 1.17$ rad
    $\theta_{S2} = -\theta_{S3} = \arcsin(0.46) = 0.48$ rad

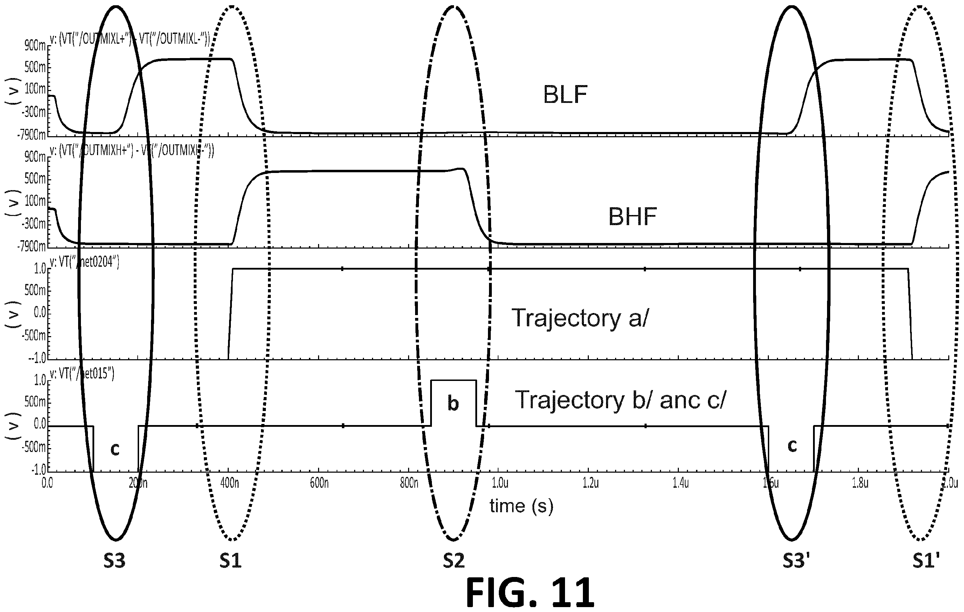

Figure 11 shows the simulated output signals (BLF, BHF) obtained with an under-fabrication 2-Bits BPSK demodulator working at the conditions described in the aforementioned real example. Each curve trajectory b/ and c/ corresponding to constant envelope cases is a pulse modulated signal that decides the frequency of the carrier vs time. For 0 value, the carrier frequency is 868 MHz, while for -1 and +1 values, the carrier frequency shifts -5 MHz and +5 MHz respectively. The duration of the frequency shift is 100 ns, changing the phase of the carrier in 180 degree. Curve trajectory a/ of the direct modulation is a pulse modulated signal that multiplies directly the phase modulated carrier either by +1 or -1, creating the 180 phase change any pulse transition. Note that, for phase changes caused by a transition in trajectory a/, both output signals (BLF, BHF) of the demodulator change their bit status (S1, S1'). For trajectory c/ cases, only the low frequency output signal (BLF) changes the bit status (S3, S3'), while for trajectory b/ case only the high frequency output signal (BHF) does change the bit status (S2).

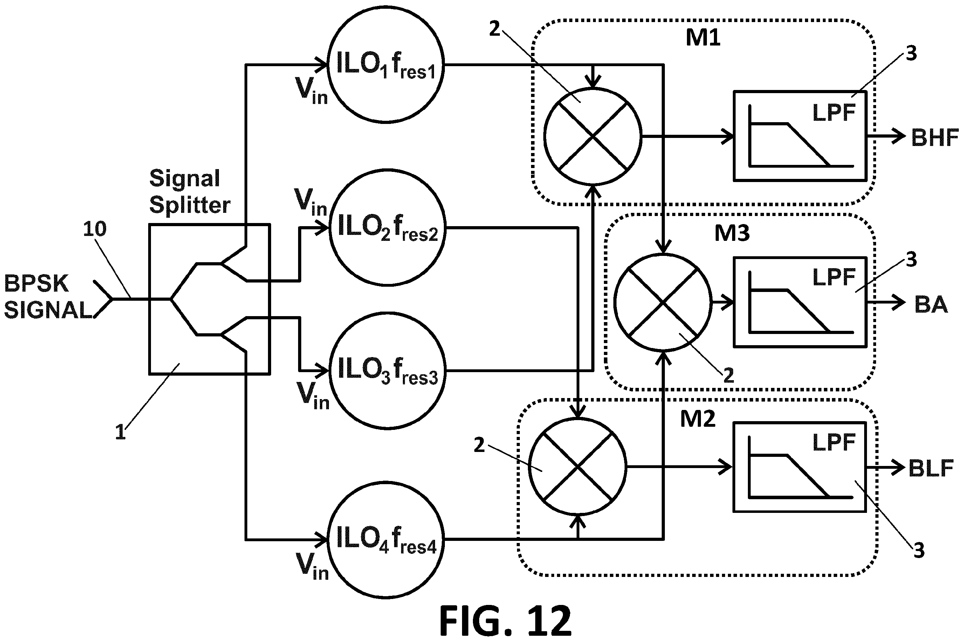

Figure 12 shows another option of implementation of the two-bit BPSK demodulator according to a possible embodiment of the invention. The architecture of this BPSK demodulator is also based on a signal splitter (1), which can be a power splitter or a voltage fan out circuit, from one input to four outputs, and the four second-harmonic injection-locked oscillators ($ILO_1$, $ILO_2$, $ILO_3$, $ILO_4$) with different self resonant frequencies ($f_{res1}$, $f_{res2}$, $f_{res3}$, $f_{res4}$) respectively. This BPSK demodulator further comprises three down-conversion mixers (M1, M2, M3) composed of a mixer (2) and a low-pass filter (3).

In this embodiment of the invention, all the oscillators ($ILO_1$, $ILO_2$, $ILO_3$, $ILO_4$) are biased at the conditions of reaching steady states after every phase change of 180 degree of the input signal. This BPSK demodulator with three down-conversion mixers (M1, M2, M3) have three ouput signals (BHF, BLF, BA), which change every bit transition according to the phase difference from $ILO_1$ and $ILO_3$, $ILO_2$ and $ILO_4$, and $ILO_1$ and $ILO_4$ respectively.

The BPSK demodulator shown in Figure 12 comprises a first down-conversion mixer (M1) for multiplying a first couple of oscillators ($ILO_1$, $ILO_3$) to obtain the first output-high frequency- signal (BHF), a second down-conversion mixer (M2) for multiplying a second couple of oscillators ($ILO_2$, $ILO_4$) to obtain the second -low frequency- output signal (BLF), and a third down-conversion mixer (M3) for multiplying a third couple of oscillators ($ILO_1$, $ILO_4$) to obtain the third output -amplitude- signal (BA).

Table 4 lists the expected change of each ouput signal (BHF, BLF, BA) of the demodulator from the values of previous bit period.

**Table 4**

|  | Direct Multiplication | Constant Envelope $+\Delta f$ | Constant Envelope $-\Delta f$ |
|---|---|---|---|
| BHF $\Delta V$ | x (-1) | x (-1) | x(+1) |
| BA $\Delta V$ | x(-1) | x (-1) | x (-1) |
| BLF $\Delta V$ | x (-1) | x (+1) | x (-1) |

Assuming all the oscillators ($ILO_1$, $ILO_2$, $ILO_3$, $ILO_4$) have originally the same phase, i.e., $\Phi_1 = \Phi_2 = \Phi_3 = \Phi_4$, and so BHF = BA = BLF = 0 or '000', once the first 180 phase change of the input signal arrives, the output signals (BHF, BLF, BA) change to '111' in the case of trajectory a/ direct multiplication, '110' in the case of trajectory b/ constant envelope with positive frequency shift, and '011' in the case of trajectory c/ constant envelope with negative frequency shift. From a value '000' it is not possible to change to values '001', '100', '010', and '101' with any of the transition trajectories. Therefore, inherently the demodulator provides the possibility of error detection and estimation.

Note that the presented modulation scheme uses BPSK in the modulation, but differential demodulation, i.e., according to a 2-bit message symbol '11', the phase of the carrier is changed with constant envelope with negative frequency shift at the transmitter, and the demodulator needs to evaluate the change of the state of the oscillators from previous message symbol, i.e., differential codification, and from that decode which method was used for the bit change and obtain the original message '11' from look up table shown in Table 1.

In a further possible embodiment of the invention, QPSK signals can be modulated and demodulated.

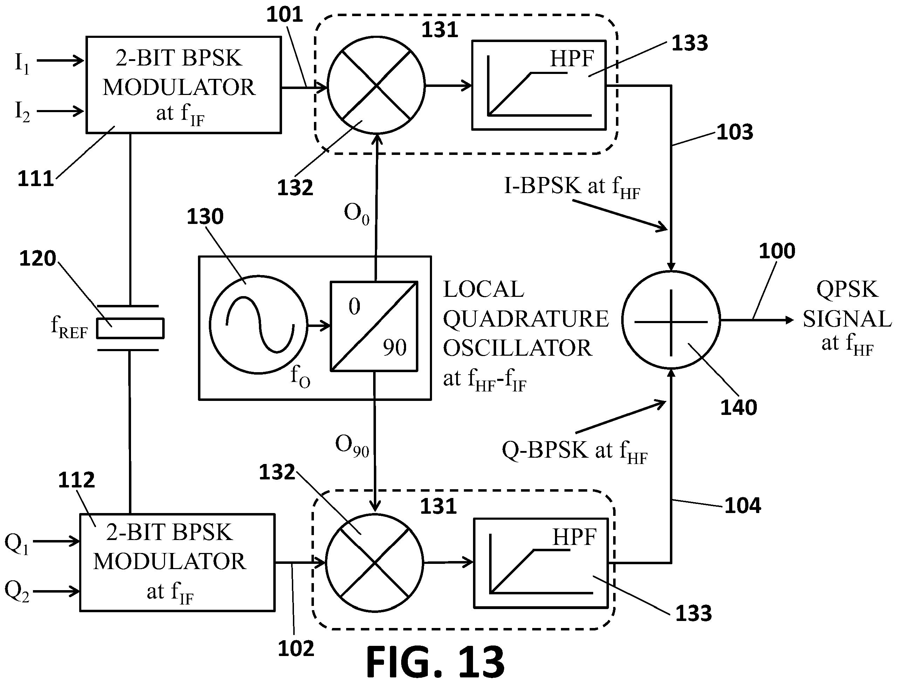

QPSK modulation is obtained by adding linearly two BPSK orthogonal signals. Originally, the BPSK signal is generated with 1-bit data stream. Nevertheless, by means of the method described before, a BPSK signal can be generated with a 2-Bit data stream. Figure 13 shows a proposal for a 4-Bit QPSK modulator. Two BPSK in-phase signals, the I-branch BPSK signal (101) and the Q-branch BPSK signal (102), are generated respectively through a first BPSK Modulator (111) with $I_1$ and $I_2$ bits and a second BPSK Modulator (112) with $Q_1$ and $Q_2$ bits. Both BPSK modulators (111, 112) are 2-Bit BPSK Modulators as proposed before, i.e., encoding the type of transition technique, a), b) or c), in a symbol of two bits of the BPSK input signal: 2-bits ($I_1$, $I_2$) by the first BPSK Modulator (111), 2-bits ($Q_1$, $Q_2$) by the second BPSK Modulator (112). Both BPSK modulators (111, 112) work at an intermediate frequency ($f_{IF}$) and are synchronized in phase with a reference frequency ($f_{REF}$), from a crystal resonator (120), for example. The 2-Bit in-phase BPSK modulated signals (101, 102) at the intermediate frequency ($f_{IF}$) must be up-converted to a high frequency ($f_{HF}$) in quadrature. For this purpose, a local oscillator (130) at an operating frequency ($f_O$) $f_O = f_{HF} - f_{IF}$ with in-phase ($O_0$) and in-quadrature ($O_{90}$) outputs and two up-conversion frequency mixers (131), comprising a frequency mixer (132) plus high pass filter (133), are used. After the up-conversion mixers (131), the 2-Bit In-phase branch BPSK signal modulated with $I_1$ and $I_2$ bits (103) and the 2-Bit Q-phase branch BPSK signal modulated with $Q_1$ and $Q_2$ bits (104) are

generated in quadrature and at the high frequency ($f_{HF}$). The sum of these two orthogonal 2-Bit BPSK signals (103, 104) by an adder (140) generates a 4-Bit QPSK modulated signal (100) at the high frequency ($f_{HF}$), wherein $f_{HF}$ may belong to a radiofrequency band of a wireless system or belong to the operating frequency band of a wired system.

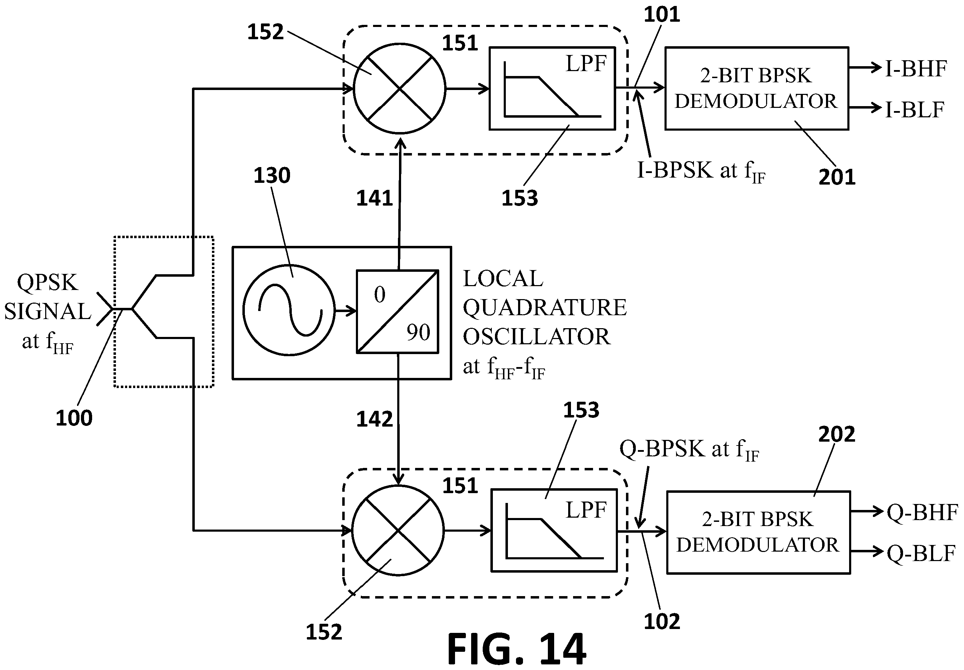

Figure 14 shows possible embodiment of a 4-Bit QPSK demodulator based on the previously described 2-Bit BPSK demodulator, defined by any of the possible 2-Bit BPSK demodulator architectures shown in Figure 1 or Figure 12. The 4-Bit QPSK modulated signal (100) is composed of two 2-Bit BPSK signals (103, 104) in quadrature. Therefore, prior to demodulation using two BPSK demodulators, it is needed to split the QPSK modulated signal (100) at a high frequency ($f_{HF}$) into an I-channel BPSK signal (101) and a Q-channel BPSK signal (102), both at intermediate frequency ($f_{IF}$). For this purpose, a local oscillator (130) with in-phase and in-quadrature outputs (141, 142) working at an operating frequency ($f_O$) $f_O = f_{HF} - f_{IF}$ and two down-conversion mixers (151), comprising a frequency mixer (152) plus low pass filter (153), are used. Once the I-BPSK and the Q-BPSK signals (101, 102) are obtained, they both are connected respectively to a first 2-Bit BPSK demodulator (201) and a second 2-Bit BPSK demodulator (202). The outputs of the demodulators (201, 202) are the bits I-BHF and I-BLF as the BHF and BLF bits of the In-phase channel, and Q-BHF and Q_BLF as bits BHF and BLF of the in-quadrature channel.

Note that in this text, the term "comprises" and its derivations (such as "comprising", etc.) should not be understood in an excluding sense, that is, these terms should not be interpreted as excluding the possibility that what is described and defined may include further elements, steps, etc.

## Claims

1. A method for modulating and demodulating PSK signals **characterized by** comprising:

    - encoding in a symbol of two bits a type of transition techniquewhich is used on a BPSK input signal (10) for BPSK modulation and selected from:

        direct multiplication which is multiplying the BPSK input signal (10) by a modulating message, constant envelope with positive frequency shift and constant envelope with negative frequency shift, wherein both constant envelope with frequency shift techniques keep the amplitude of the BPSK input signal (10) constant and change the phase of the BPSK input signal (10), by increasing the frequency of the BPSK input signal (10) for the constant envelope with positive frequency shift and decreasing the frequency of the BPSK input signal (10) for the constant envelope with negative frequency shift, the phase change of the BPSK input signal (10) being determined by the value of the two bits symbol;

    - encoding in a symbol of four bits a type of transition technique which is used on a QPSK input signal (100) for QPSK modulation, wherein two bits of the four bits symbol encode a first type of transition technique used for BPSK modulation as explained above on an I-branch BPSK signal (101), and the remaining two bits of the four bits symbol encode a second type of transition technique used for BPSK modulation on a Q-branch BPSK signal (102), the first and second type of transition technique defining the type of transition technique used on the QPSK input signal (100) and both being selected from direct multiplication, constant envelope with positive frequency shift and constant envelope with negative frequency shift.

2. The method according to claim 1, further comprising:

    - injecting the encoded and modulated BPSK input signal (10) into four second-harmonic injection-locked oscillators ($ILO_1$, $ILO_2$, $ILO_3$, $ILO_4$), which are all locked to the BPSK input signal (10) in absence of bit changes;
    - detecting whether there is a phase transition at the output of the oscillators ($ILO_1$, $ILO_2$, $ILO_3$, $ILO_4$) and if so, determining the type of transition technique used for modulating the injected BPSK input signal (10) based on the phase transition of the output of all the four oscillators ($ILO_1$, $ILO_2$, $ILO_3$, $ILO_4$) and demodulating the symbol of two bits using the determined type of transition technique.

3. The method according to claim 2, further comprising:

    - multiplying at least two pairs of the four second-harmonic injection-locked oscillators ($ILO_1$, $ILO_2$, $ILO_3$, $ILO_4$) to obtain a first output signal (BHF) by multiplying a first couple of oscillators ($ILO_1$, $ILO_3$) and a second output signal (BLF) by multiplying a second couple of oscillators ($ILO_2$, $ILO_4$).

4. The method according to claim 3, wherein detecting whether there is a phase transition at the output of the oscillators

(ILO$_1$, ILO$_2$, ILO$_3$, ILO$_4$) comprises:

- detecting whether there is a bit transition in at least one of the outputs signal (BHF, BLF) and if so, determining that the type of transition technique used for modulating the BPSK input signal (10) is:

- direct multiplication if both the first output signal (BHF) and second output signal (BLF) have the bit transition,
- constant envelope if only one of the first output signal (BHF) and the second output signal (BLF) has the bit transition.

5. The method according to claim 3, further comprising multiplying a third pair of the four second-harmonic injection-locked oscillators (ILO$_1$, ILO$_2$, ILO$_3$, ILO$_4$) to obtain a third output signal (BA) by multiplying a third couple of oscillators (ILO$_1$, ILO$_4$) and determining that the type of transition technique used for modulating the BPSK input signal (10) is:

- direct multiplication if all the three output signals (BHF, BLF, BA) have the bit transition,
- constant envelope if:

- either the first output signal (BHF) plus third output signal (BA) have bit transition
- or the second output signal (BLF) plus third output signal (BA) have bit transition.

6. The method according to any preceding claim, further comprising:

- generating the I-branch BPSK signal (101) and Q-branch BPSK signal (102) at an intermediate frequency ($f_{IF}$), the I-branch BPSK signal (101) modulated with a symbol of two bits ($I_1$, $I_2$) encoding the first type of transition technique and the Q-branch BPSK signal (102) modulated with another symbol of two bits ($Q_1$, $Q_2$) encoding the second type of transition technique;
- up-converting both the I-branch BPSK signal (101) and Q-branch BPSK signal (102) from the intermediate frequency ($f_{IF}$) to a high frequency ($f_{HF}$) to obtain two BPSK orthogonal signals (103, 104) at the high frequency ($f_{HF}$), an In-phase branch BPSK signal modulated with $I_1$ and $I_2$ bits (103) and a Q-phase branch BPSK signal modulated with $Q_1$ and $Q_2$ bits (104) generated in quadrature;
- generating at the high frequency ($f_{HF}$) the QPSK modulated signal (100) by adding linearly the two BPSK orthogonal signals (103, 104).

7. The method according to claim 6, further comprising:

- extracting the I-branch BPSK signal (101) and the Q-branch BPSK signal (102) at an intermediate frequency ($f_{IF}$) from the QPSK modulated signal (100) being at the high frequency ($f_{HF}$);
- generating by a local quadrature oscillator (130), working at an operating frequency ($f_O$) fo = $f_{HF}$ - $f_{IF}$, an in-phase output signal (141) and an in-quadrature output signal (142);
- and wherein the I-branch BPSK signal (101) and the Q-branch BPSK signal (102) are extracted by injecting the QPSK modulated signal (100) into a down-conversion mixer (151) along with the in-phase output signal (141) and the in-quadrature output signal (142) of the local quadrature oscillator (130) respectively.

8. The method according to claim 7, wherein the extracted I-branch BPSK signal (101) and the Q-branch BPSK signal (102) are injected respectively to a first BPSK demodulator (201) and a second BPSK demodulator (202) which both operate at the intermediate frequency ($f_{IF}$) according to the method defined by any of claims 2-5.

9. A BPSK demodulator (201, 202) **characterized by** comprising:

- a signal splitter (1) through which a BPSK input signal (10) is injected into four second-harmonic injection-locked oscillators (ILO$_1$, ILO$_2$, ILO$_3$, ILO$_4$), the BPSK input signal (10) comprising a symbol of two bits which encode a type of transition technique, selected from:

direct multiplication, which is multiplying the BPSK input signal (10) by a modulating message, and constant envelope with positive frequency shift and constant envelope with negative frequency shift, wherein both constant envelope with frequency shift techniques keep the amplitude of the BPSK input signal (10) constant and change the phase of the BPSK input signal (10), by increasing the frequency of the BPSK input signal (10) for the constant envelope with positive frequency shift and decreasing the frequency of the BPSK input signal (10) for the constant envelope with negative frequency shift, the phase change of the BPSK input signal (10) being determined by the value of the two bits symbol;

- the four second-harmonic injection-locked oscillators ($ILO_1$, $ILO_2$, $ILO_3$, $ILO_4$), which in absence of BPSK input signal (10) oscillate at a self-resonant frequency with a frequency offset from half of the frequency of the BPSK input signal (10), the four second-harmonic injection-locked oscillators (ILO1, ILO2, ILO3, ILO4) having different frequency offsets symmetrically distributed around zero, wherein a first oscillator ($ILO_1$) and a second oscillator ($ILO_2$) have a positive frequency offset, the first oscillator ($ILO_1$) has a higher frequency offset than the frequency offset of the second oscillator ($ILO_2$), a third oscillator ($ILO_3$) and a fourth oscillator ($ILO_4$) have negative frequency offset, and the third oscillator ($ILO_3$) has a smaller absolute value of frequency offset than the frequency offset of the fourth oscillator ($ILO_4$);
- the four second-harmonic injection-locked oscillators ($ILO_1$, $ILO_2$, $ILO_3$, $ILO_4$), which in presence of BPSK input signal (10) are all locked to the BPSK input signal (10) in absence of bit changes and determine the type of transition technique used for modulating the BPSK input signal (10) based on a phase transition of the output of all the four oscillators ($ILO_1$, $ILO_2$, $ILO_3$, $ILO_4$).

10. The BPSK demodulator (201, 202) according to claim 9, further comprising a first down-conversion mixer (M1) for multiplying a first couple of oscillators ($ILO_1$, $ILO_3$) to obtain a first output signal (BHF) and a second down-conversion mixer (M2) for multiplying a second couple of oscillators ($ILO_2$, $ILO_4$) to obtain a second output signal (BLF), both down-conversion mixers (M1, M2) comprising a mixer (2) and a low-pass filter (3).

11. The BPSK demodulator (201, 202) according to claim 10, further comprising means for detecting whether there is a bit transition in at least one of the output signal (BHF, BLF) and if so, determining that the type of transition technique used for modulating the BPSK input signal (10) is:

- direct multiplication if both the first output signal (BHF) and second output signal (BLF) have the bit transition,
- constant envelope if only one of the first output signal (BHF) and the second output signal (BLF) has the bit transition.

12. The BPSK demodulator (201, 202) according to claim 10, further comprising multiplying a third down-conversion mixer (M3) for multiplying a third couple of oscillators ($ILO_1$, $ILO_4$) to obtain a third output signal (BA).

13. The BPSK demodulator (201, 202) according to claim 12, further comprising means for detecting whether there is a bit transition in at least one of the outputs signal (BHF, BLF, BA) and if so, determining that the type of transition technique used for modulating the BPSK input signal (10) is:

- direct multiplication if all the three output signals (BHF, BLF, BA) have the bit transition,
- constant envelope if the third output signal (BA) plus one of the first two output signals (BHF or BLF) have the bit transition.

14. A QPSK demodulator **characterized by** comprising:

- a local oscillator (130) working at an operating frequency ($f_O$) $f_O = f_{HF} - f_{IF}$ with in-phase and in-quadrature outputs (141, 142) injected respectively to two down-conversion mixers (151) for extracting from a QPSK signal (100) at a high frequency ($f_{HF}$) an I-branch BPSK signal (101) and a Q-branch BPSK signal (102) which are BPSK orthogonal signals at an intermediate frequency ($f_{IF}$), wherein each down-conversion mixer (151) comprises a frequency mixer (152) and a low pass filter (153);
- a first BPSK demodulator (201) and a second BPSK demodulator (202) connected respectively to the two down-conversion mixers (151), both first BPSK demodulator (201) and second BPSK demodulator (202) defined according to claims 10-14 and working at the intermediate frequency ($f_{IF}$), wherein the I-branch BPSK signal (101) is the input signal of the first BPSK demodulator (201) and the Q-branch BPSK signal (102) is the input signal of the second BPSK demodulator (202).

**Patentansprüche**

1. Ein Verfahren zur Modulation und Demodulation von PSK-Signalen, **dadurch gekennzeichnet, dass** es umfasst:

- Codierung in einem Symbol aus zwei Bits eines Typs einer Übergangstechnik, die bei einem BPSK-Eingangssignal (10) für BPSK-Modulation verwendet wird und ausgewählt ist aus:

direkter Multiplikation, die eine Multiplikation des BPSK-Eingangssignals (10) mit einer modulierenden Nachricht ist,

konstanter Hüllkurve mit positiver Frequenzverschiebung und konstanter Hüllkurve mit negativer Frequenzverschiebung, wobei beide Techniken der konstanten Hüllkurve mit Frequenzverschiebung die Amplitude des BPSK-Eingangssignals (10) konstant halten und die Phase des BPSK-Eingangssignals (10) ändern, indem die Frequenz des BPSK-Eingangssignals (10) für die konstante Hüllkurve mit positiver Frequenzverschiebung erhöht und die Frequenz des BPSK-Eingangssignals (10) für die konstante Hüllkurve mit negativer Frequenzverschiebung verringert wird, wobei die Phasenänderung des BPSK-Eingangssignals (10) durch den Wert des Zwei-Bit-Symbols bestimmt wird;

- Codierung in einem Symbol aus vier Bits eines Typs einer Übergangstechnik, die bei einem QPSK-Eingangssignal (100) für QPSK-Modulation verwendet wird, wobei zwei Bits des Vier-Bit-Symbols einen ersten Typ einer Übergangstechnik codieren, die für BPSK-Modulation wie oben erläutert bei einem I-Zweig-BPSK-Signal (101) verwendet wird, und die verbleibenden zwei Bits des Vier-Bit-Symbols einen zweiten Typ einer Übergangstechnik codieren, die für BPSK-Modulation bei einem Q-Zweig-BPSK-Signal (102) verwendet wird, wobei der erste und der zweite Typ der Übergangstechnik den Typ der Übergangstechnik definieren, der bei dem QPSK-Eingangssignal (100) verwendet wird, und beide ausgewählt sind aus direkter Multiplikation, konstanter Hüllkurve mit positiver Frequenzverschiebung und konstanter Hüllkurve mit negativer Frequenzverschiebung.

2. Das Verfahren gemäß Anspruch 1, ferner umfassend:

- Injizieren des codierten und modulierten BPSK-Eingangssignals (10) in vier injektionsverriegelte Oszillatoren ($ILO_1$, $ILO_2$, $ILO_3$, $ILO_4$) der zweiten Harmonischen, die alle in Abwesenheit von Bitänderungen auf das BPSK-Eingangssignal (10) verriegelt sind;
- Detektieren, ob es einen Phasenübergang am Ausgang der Oszillatoren ($ILO_1$, $ILO_2$, $ILO_3$, $ILO_4$) gibt, und wenn ja, Bestimmen des Typs der Übergangstechnik, die zum Modulieren des injizierten BPSK-Eingangssignals (10) verwendet wird, basierend auf dem Phasenübergang des Ausgangs aller vier Oszillatoren ($ILO_1$, $ILO_2$, $ILO_3$, $ILO_4$) und Demodulieren des Symbols aus zwei Bits unter Verwendung des bestimmten Typs der Übergangstechnik.

3. Das Verfahren gemäß Anspruch 2, ferner umfassend:

- Multiplizieren von mindestens zwei Paaren der vier injektionsverriegelten Oszillatoren der zweiten Harmonischen ($ILO_1$, $ILO_2$, $ILO_3$, $ILO_4$), um ein erstes Ausgangssignal (BHF) durch Multiplizieren erster zwei Oszillatoren ($ILO_1$, $ILO_3$) und ein zweites Ausgangssignal (BLF) durch Multiplizieren zweiter zwei Oszillatoren ($ILO_2$, $ILO_4$) zu erhalten.

4. Das Verfahren gemäß Anspruch 3, wobei das Detektieren, ob es einen Phasenübergang am Ausgang der Oszillatoren ($ILO_1$, $ILO_2$, $ILO_3$, $ILO_4$) gibt, umfasst:

- Detektieren, ob es einen Bitübergang in mindestens einem der Ausgangssignale (BHF, BLF) gibt, und wenn ja, Bestimmen, dass der Typ der Übergangstechnik, die für die Modulation des BPSK-Eingangssignals (10) verwendet wird:

- direkte Multiplikation ist, wenn sowohl das erste Ausgangssignal (BHF) als auch das zweite Ausgangssignal (BLF) den Bitübergang aufweisen,
- konstante Hüllkurve ist, wenn nur eines des ersten Ausgangssignals (BHF) und des zweiten Ausgangssignals (BLF) den Bitübergang aufweist.

5. Das Verfahren gemäß Anspruch 3, ferner umfassend Multiplizieren eines dritten Paares der vier injektionsverriegelten Oszillatoren ($ILO_1$, $ILO_2$, $ILO_3$, $ILO_4$) der zweiten Harmonischen, um ein drittes Ausgangssignal (BA) durch Multiplizieren dritter zwei Oszillatoren ($ILO_1$, $ILO_4$) zu erhalten, und Bestimmen, dass der Typ der Übergangstechnik, der für die Modulation des BPSK-Eingangssignals (10) verwendet wird:

- direkte Multiplikation ist, wenn alle drei Ausgangssignale (BHF, BLF, BA) den Bitübergang aufweisen,
- konstante Hüllkurve ist, wenn:

- entweder das erste Ausgangssignal (BHF) plus das dritte Ausgangssignal (BA) Bitübergang haben
- oder das zweite Ausgangssignal (BLF) plus das dritte Ausgangssignal (BA) Bitübergang haben.

6. Das Verfahren gemäß einem der vorhergehenden Ansprüche, ferner umfassend

- Erzeugen des I-Zweig-BPSK-Signals (101) und des Q-Zweig-BPSK-Signals (102) bei einer Zwischenfrequenz ($f_{IF}$), wobei das I-Zweig-BPSK-Signal (101) mit einem Symbol aus zwei Bits ($I_1$, $I_2$) moduliert ist, das den ersten Typ der Übergangstechnik codiert, und das Q-Zweig-BPSK-Signal (102) mit einem weiteren Symbol aus zwei Bits ($Q_1$, $Q_2$) moduliert ist, das den zweiten Typ der Übergangstechnik codiert;
- Aufwärtswandeln sowohl des I-Zweig-BPSK-Signals (101) als auch des Q-Zweig-BPSK-Signals (102) von der Zwischenfrequenz ($f_{IF}$) auf eine Hochfrequenz ($f_{HF}$), um zwei orthogonale BPSK-Signale (103, 104) bei der Hochfrequenz ($f_{HF}$) zu erhalten, ein mit $I_1$- und $I_2$-Bits moduliertes In-Phasen-Zweig-BPSK-Signal (103) und ein mit $Q_1$- und Q2-Bits moduliertes Q-Phasen-Zweig-BPSK-Signal (104), die in Quadratur erzeugt werden;
- Erzeugen des QPSK-modulierten Signals (100) bei der Hochfrequenz ($f_{HF}$) durch lineares Addieren der beiden orthogonalen BPSK-Signale (103, 104).

7. Das Verfahren gemäß Anspruch 6, ferner umfassend:

- Extrahieren des I-Zweig-BPSK-Signals (101) und des Q-Zweig-BPSK-Signals (102) bei einer Zwischenfrequenz ($f_{IF}$) aus dem QPSK-modulierten Signal (100), das auf der Hochfrequenz ($f_{HF}$) liegt;
- Erzeugen eines In-Phasen-Ausgangssignals (141) und eines In-Quadratur-Ausgangssignals (142) durch einen lokalen Quadratur-Oszillator (130), der bei einer Betriebsfrequenz ($f_O$) $f_O = f_{HF} - f_{IF}$ arbeitet;
- und wobei das I-Zweig-BPSK-Signal (101) und das Q-Zweig-BPSK-Signal (102) extrahiert werden durch Injizieren des QPSK-modulierten Signals (100) in einen Abwärtswandlungs-Mischer (151) zusammen mit dem In-Phasen-Ausgangssignal (141) bzw. dem In-Quadratur-Ausgangssignal (142) des lokalen Quadratur-Oszillators (130).

8. Das Verfahren gemäß Anspruch 7, wobei das extrahierte I-Zweig-BPSK-Signal (101) und Q-Zweig-BPSK-Signal (102) in einen ersten BPSK-Demodulator (201) bzw. einen zweiten BPSK-Demodulator (202) injiziert werden, die beide gemäß dem in einem der Ansprüche 2-5 definierten Verfahren bei der Zwischenfrequenz ($f_{IF}$) arbeiten.

9. Ein BPSK-Demodulator (201, 202), **dadurch gekennzeichnet, dass** er umfasst:

- einen Signalteiler (1), durch den ein BPSK-Eingangssignal (10) in vier injektionsverriegelte Oszillatoren ($ILO_1$, $ILO_2$, $ILO_3$, $ILO_4$) der zweiten Harmonischen injiziert wird, wobei das BPSK-Eingangssignal (10) ein Symbol aus zwei Bits umfasst, die einen Typ einer Übergangstechnik codieren, ausgewählt aus:

  direkter Multiplikation, die eine Multiplikation des BPSK-Eingangssignals (10) mit einer modulierenden Nachricht ist, und
  konstanter Hüllkurve mit positiver Frequenzverschiebung und konstanter Hüllkurve mit negativer Frequenzverschiebung, wobei beide Techniken der konstanten Hüllkurve mit Frequenzverschiebung die Amplitude des BPSK-Eingangssignals (10) konstant halten und die Phase des BPSK-Eingangssignals (10) ändern, indem die Frequenz des BPSK-Eingangssignals (10) für die konstante Hüllkurve mit positiver Frequenzverschiebung erhöht und die Frequenz des BPSK-Eingangssignals (10) für die konstante Hüllkurve mit negativer Frequenzverschiebung verringert wird, wobei die Phasenänderung des BPSK-Eingangssignals (10) durch den Wert des Zwei-Bit-Symbols bestimmt wird;

- die vier injektionsverriegelten Oszillatoren ($ILO_1$, $ILO_2$, $ILO_3$, $ILO_4$) der zweiten Harmonischen, die in Abwesenheit des BPSK-Eingangssignals (10) bei einer Eigenresonanzfrequenz mit einem Frequenzversatz von der Hälfte der Frequenz des BPSK-Eingangssignals (10) oszillieren, wobei die vier injektionsverriegelten Oszillatoren ($ILO_1$, $ILO_2$, $ILO_3$, $ILO_4$) der zweiten Harmonischen unterschiedliche Frequenzversätze aufweisen, die symmetrisch um Null herum verteilt sind, wobei ein erster Oszillator ($ILO_1$) und ein zweiter Oszillator ($ILO_2$) einen positiven Frequenzversatz haben, der erste Oszillator (ILO1) einen höheren Frequenzversatz als der Frequenzversatz des zweiten Oszillators ($ILO_2$) aufweist, ein dritter Oszillator ($ILO_3$) und ein vierter Oszillator ($ILO_4$) einen negativen Frequenzversatz aufweisen und der dritte Oszillator ($ILO_3$) einen kleineren Absolutwert des Frequenzversatzes als der Frequenzversatz des vierten Oszillators ($ILO_4$) aufweist;
- die vier injektionsverriegelten Oszillatoren ($ILO_1$, $ILO_2$, $ILO_3$, $ILO_4$) der zweiten Harmonischen, die bei Vorhandensein des BPSK-Eingangssignals (10) alle auf das BPSK-Eingangssignal (10) in Abwesenheit von Bitänderungen verriegelt sind, und den Typ der Übergangstechnik, die zum Modulieren des BPSK-Eingangssignals (10) verwendet wird, basierend auf einem Phasenübergang des Ausgangs aller vier Oszillatoren ($ILO_1$, $ILO_2$, $ILO_3$, $ILO_4$) bestimmen.

10. Der BPSK-Demodulator (201, 202) gemäß Anspruch 9, ferner umfassend einen ersten Abwärtswandlungs-Mischer (M1) zum Multiplizieren erster zwei Oszillatoren ($ILO_1$, $ILO_3$), um ein erstes Ausgangssignal (BHF) zu erhalten, und einen zweiten Abwärtswandlungs-Mischer (M2) zum Multiplizieren zweiter zwei Oszillatoren ($ILO_2$, $ILO_4$), um ein zweites Ausgangssignal (BLF) zu erhalten, wobei beide Abwärtswandlungs-Mischer (M1, M2) einen Mischer (2) und ein Tiefpassfilter (3) umfassen.

11. Der BPSK-Demodulator (201, 202) gemäß Anspruch 10, ferner umfassend Mittel zum Detektieren, ob es einen Bitübergang in mindestens einem der Ausgangssignale (BHF, BLF) gibt, und wenn ja, zum Bestimmen, dass der Typ der Übergangstechnik, die für die Modulation des BPSK-Eingangssignals (10) verwendet wird

    - direkte Multiplikation ist, wenn sowohl das erste Ausgangssignal (BHF) als auch das zweite Ausgangssignal (BLF) den Bitübergang aufweisen,
    - konstante Hüllkurve ist, wenn nur eines des ersten Ausgangssignals (BHF) und des zweiten Ausgangssignals (BLF) den Bitübergang aufweist.

12. Der BPSK-Demodulator (201, 202) gemäß Anspruch 10, ferner umfassend Multiplizieren einen dritten Abwärtswandlungs-Mischer (M3), um dritte zwei Oszillatoren ($ILO_1$, $ILO_4$) zu multiplizieren, um ein drittes Ausgangssignal (BA) zu erhalten.

13. Der BPSK-Demodulator (201, 202) gemäß Anspruch 12, ferner umfassend Mittel zum Detektieren, ob es einen Bitübergang in mindestens einem der Ausgangssignale (BHF, BLF, BA) gibt, und wenn ja, zum Bestimmen, dass der Typ der Übergangstechnik, die für die Modulation des BPSK-Eingangssignals (10) verwendet wird:

    - direkte Multiplikation ist, wenn alle drei Ausgangssignale (BHF, BLF, BA) den Bitübergang aufweisen,
    - konstante Hüllkurve ist, wenn das dritte Ausgangssignal (BA) plus eines der ersten beiden Ausgangssignale (BHF oder BLF) den Bitübergang aufweisen.

14. Ein QPSK-Demodulator, **dadurch gekennzeichnet, dass** er umfasst:

    - einen lokalen Oszillator (130), der bei einer Betriebsfrequenz ($f_O$) $f_O = f_{HF} - f_{IF}$ arbeitet, mit In-Phasen- und In-Quadratur-Ausgängen (141, 142), die in zwei Abwärtswandlungs-Mischer (151) injiziert werden, um aus einem QPSK-Signal (100) bei einer Hochfrequenz ($f_{HF}$) ein I-Zweig-BPSK-Signal (101) und ein Q-Zweig-BPSK-Signal (102) zu extrahieren, die orthogonale BPSK-Signale bei einer Zwischenfrequenz ($f_{IF}$) sind, wobei jeder Abwärtswandlungs-Mischer (151) einen Frequenzmischer (152) und ein Tiefpassfilter (153) umfasst;
    - einen ersten BPSK-Demodulator (201) und einen zweiten BPSK-Demodulator (202), die mit den beiden Abwärtswandlungs-Mischern (151) verbunden sind, wobei sowohl der erste BPSK-Demodulator (201) als auch der zweite BPSK-Demodulator (202) gemäß den Ansprüchen 10-14 definiert sind und bei der Zwischenfrequenz ($f_{IF}$) arbeiten, wobei das I-Zweig-BPSK-Signal (101) das Eingangssignal des ersten BPSK-Demodulators (201) ist und das Q-Zweig-BPSK-Signal (102) das Eingangssignal des zweiten BPSK-Demodulators (202) ist.

**Revendications**

1. Procédé destiné à la modulation et à la démodulation de signaux PSK, **caractérisé par le fait qu'**il comprend :

    - l'encodage, dans un symbole de deux bits, d'un type de technique de transition qui est utilisé sur un signal d'entrée BPSK (10) pour une modulation de type BPSK et qui est choisi parmi :

        une multiplication directe qui multiplie le signal d'entrée BPSK (10) par un message de modulation ;
        une enveloppe constante qui comprend un déplacement de fréquence positif et une enveloppe constante qui comprend un déplacement de fréquence négatif ; dans lequel les deux enveloppes constantes qui comprennent des techniques de déplacement de fréquence maintiennent constante l'amplitude du signal d'entrée BPSK (10) et procèdent à un changement de la phase du signal d'entrée BPSK (10), grâce à une augmentation de la fréquence du signal d'entrée BPSK (10) pour l'enveloppe constante qui comprend un déplacement de fréquence positif et à une diminution de la fréquence du signal d'entrée BPSK (10) pour l'enveloppe constante qui comprend un déplacement de fréquence négatif, le changement de phase du signal d'entrée BPSK (10) étant déterminé par la valeur du symbole de deux bits ;

- l'encodage, dans un symbole de quatre bits, d'un type de technique de transition qui est utilisé sur un signal d'entrée QPSK (100) pour une modulation de type QPSK ; dans lequel deux bits du symbole de quatre bits encodent un premier type de technique de transition que l'on utilise pour une modulation de type BPSK comme expliqué ci-dessus sur un signal BPSK à branche I (101), et les deux bits restants du symbole de quatre bits encodent un deuxième type de technique de transition que l'on utilise pour une modulation de type BPSK sur un signal BPSK à branche Q (102), le premier et le deuxième type de technique de transition définissant le type de technique de transition que l'on utilise sur le signal d'entrée QPSK (100) et les deux étant choisis parmi une multiplication directe, une enveloppe constante qui comprend un déplacement de fréquence positif et une enveloppe constante qui comprend un déplacement de fréquence négatif.

2. Procédé selon la revendication 1, qui comprend en outre le fait de :

- injecter le signal d'entrée BPSK (10) qui a été encodé et qui a été modulé dans quatre oscillateurs de deuxième harmonique verrouillés par injection ($ILO_1$, $ILO_2$, $ILO_3$, $ILO_4$), qui sont tous verrouillés au signal d'entrée BPSK (10) en l'absence de changements binaires ;
- détecter le fait de savoir si l'on se trouve en présence d'une transition de phase à la sortie des oscillateurs ($ILO_1$, $ILO_2$, $ILO_3$, $ILO_4$), et si tel est le cas, déterminer le type de technique de transition qui est utilisé pour la modulation du signal d'entrée BPSK (10) qui a été injecté, en se basant sur la transition de phase de la sortie de l'ensemble des quatre oscillateurs ($ILO_1$, $ILO_2$, $ILO_3$, $ILO_4$), et démoduler le symbole de deux bits en utilisant le type de technique de transition qui a été déterminé.

3. Procédé selon la revendication 2, qui comprend en outre le fait de :

- multiplier au moins deux paires des quatre oscillateurs de deuxième harmonique verrouillés par injection ($ILO_1$, $ILO_2$, $ILO_3$, $ILO_4$) dans le but d'obtenir un premier signal de sortie (BHF) en multipliant un premier couple d'oscillateurs ($ILO_1$, $ILO_3$) et un deuxième signal de sortie (BLF) en multipliant un deuxième couple d'oscillateurs ($ILO_2$, $ILO_4$).

4. Procédé selon la revendication 3, dans lequel la détection du fait de savoir si l'on se trouve en présence d'une transition de phase à la sortie des oscillateurs ($ILO_1$, $ILO_2$, $ILO_3$, $ILO_4$) comprend le fait de :

- détecter le fait de savoir si l'on se trouve en présence d'une transition binaire dans au moins un des signaux de sortie (BHF, BLF), et si tel est le cas, déterminer que le type de technique de transition que l'on utilise pour la modulation du signal d'entrée BPSK (10) est :

   - une multiplication directe lorsque à la fois le premier signal de sortie (BHF) et le deuxième signal de sortie (BLF) possèdent la transition binaire ;
   - une enveloppe constante lorsque seulement un signal parmi le premier signal de sortie (BHF) et le deuxième signal de sortie (BLF) possède la transition binaire.

5. Procédé selon la revendication 3, qui comprend en outre le fait de multiplier une troisième paire des quatre oscillateurs de deuxième harmonique verrouillés par injection ($ILO_1$, $ILO_2$, $ILO_3$, $ILO_4$) dans le but d'obtenir un troisième signal de sortie (BA) en multipliant un troisième couple d'oscillateurs ($ILO_1$, $ILO_4$) et le fait de déterminer que le type de technique de transition que l'on utilise pour la modulation du signal d'entrée BPSK (10) est :

   - une multiplication directe lorsque la totalité des trois signaux de sortie (BHF, BLF, BA) possèdent la transition binaire ;
   - une enveloppe constante lorsque :

      - soit le premier signal de sortie (BHF) plus le troisième signal de sortie (BA) possèdent la transition binaire ;
      - soit le deuxième signal de sortie (BLF) plus le troisième signal de sortie (BA) possèdent la transition binaire.

6. Procédé selon l'une quelconque des revendications précédentes, qui comprend en outre le fait de :

- générer le signal BPSK à branche I (101) et le signal BPSK à branche Q (102) à une fréquence intermédiaire ($f_{IF}$), le signal BPSK à branche I (101) qui a été modulé avec un symbole de deux bits ($I_1$, $I_2$) encodant le premier type de technique transition et le signal BPSK à branche Q (102) qui a été modulé avec un autre symbole de deux bits ($Q_1$, $Q_2$) encodant le deuxième type de technique transition ;
- soumettre à une conversion ascendante à la fois le signal BPSK à branche I (101) et le signal BPSK à branche Q (102) à partir de la fréquence intermédiaire ($f_{IF}$) jusqu'à une haute fréquence ($f_{HF}$) dans le but d'obtenir deux signaux BPSK orthogonaux (103, 104) à la haute fréquence ($f_{HF}$), un signal BPSK à branche en phase qui a été modulé avec les bits $I_1$ et $I_2$ (103) et un signal BPSK à branche en phase Q modulé avec les bits $Q_1$ et $Q_2$ (104) qui ont été générés en quadrature de phase ;
- générer, à la haute fréquence ($f_{HF}$), le signal modulé QPSK (100) en procédant à une addition linéaire des deux signaux BPSK orthogonaux (103, 104).

7. Procédé selon la revendication 6, qui comprend en outre le fait de :

- extraire le signal BPSK à branche I (101) et le signal BPSK à branche Q (102) à une fréquence intermédiaire ($f_{IF}$) à partir du signal modulé QPSK (100) qui se trouve à la haute fréquence ($f_{HF}$) ;
- générer, par l'intermédiaire d'un oscillateur local en quadrature de phase (130), qui travaille à une fréquence de travail ($f_O$) $f_O = f_{HF} - f_{IF}$, un signal de sortie en phase (141) et un signal de sortie en quadrature de phase (142) ;
- et dans lequel le signal BPSK à branche I (101) et le signal BPSK à branche Q (102) sont extraits par injection du signal modulé QPSK (100) dans un mélangeur du type à conversion descendante (151) de manière conjointe avec le signal de sortie en phase (141) et le signal de sortie en quadrature de phase (142) de l'oscillateur local en quadrature de phase (130), respectivement.

8. Procédé selon la revendication 7, dans lequel le signal BPSK extrait à branche I (101) et le signal BPSK à branche Q (102) sont injectés respectivement dans un premier démodulateur de type BPSK (201) et un deuxième démodulateur de type BPSK (202) qui travaillent tous deux à la fréquence intermédiaire ($f_{IF}$) conformément au procédé tel que défini dans l'une quelconque des revendications 2 à 5.

9. Démodulateur de type BPSK (201, 202) **caractérisé par le fait qu'**il comprend :

- un coupleur de signal (1) par l'intermédiaire duquel un signal d'entrée BPSK (10) est injecté dans quatre oscillateurs de deuxième harmonique verrouillés par injection ($ILO_1$, $ILO_2$, $ILO_3$, $ILO_4$), le signal d'entrée BPSK (10) comprenant un symbole de deux bits qui encode un type de technique de transition, qui est choisi parmi :

une multiplication directe qui multiplie le signal d'entrée BPSK (10) par un message de modulation ; et une enveloppe constante qui comprend un déplacement de fréquence positif et une enveloppe constante qui comprend un déplacement de fréquence négatif ; dans lequel les deux enveloppes constantes qui comprennent des techniques de déplacement de fréquence maintiennent constante l'amplitude du signal d'entrée BPSK (10) et procèdent à un changement de la phase du signal d'entrée BPSK (10), grâce à une augmentation de la fréquence de signal d'entrée BPSK (10) pour l'enveloppe constante qui comprend un déplacement de fréquence positif et à une diminution de la fréquence de signal d'entrée BPSK (10) pour l'enveloppe constante qui comprend un déplacement de fréquence négatif, le changement de phase du signal d'entrée BPSK (10) étant déterminé par la valeur du symbole de deux bits ;

- les quatre oscillateurs de deuxième harmonique verrouillés par injection ($ILO_1$, $ILO_2$, $ILO_3$, $ILO_4$) qui, en l'absence du signal d'entrée BPSK (10), oscillent à une fréquence propre avec une fréquence décalée de la moitié de la fréquence du signal d'entrée BPSK (10), les quatre oscillateurs de deuxième harmonique verrouillés par injection ($ILO_1$, $ILO_2$, $ILO_3$, $ILO_4$) possédant des décalages de fréquence différents distribués de manière symétrique autour de zéro ; dans lequel un premier oscillateur ($ILO_1$) et un deuxième oscillateur ($ILO_2$) possèdent un décalage de fréquence positif, le premier oscillateur ($ILO_1$) possédant un décalage de fréquence supérieur au décalage de fréquence du deuxième oscillateur ($ILO_2$), un troisième oscillateur ($ILO_3$) et un quatrième oscillateur ($ILO_4$) possèdent un décalage fréquence négatif, et le troisième oscillateur ($ILO_3$) possédant une valeur absolue de décalage de fréquence inférieure au décalage de fréquence du quatrième oscillateur ($ILO_4$) ;
- les quatre oscillateurs de deuxième harmonique verrouillés par injection ($ILO_1$, $ILO_2$, $ILO_3$, $ILO_4$) qui, en présence du signal d'entrée BPSK (10), sont tous verrouillés au signal d'entrée BPSK en l'absence de changements binaires et déterminent le type de technique de transition que l'on utilise pour la modulation du signal d'entrée BPSK en se basant sur une transition de phase de la sortie de la totalité des quatre oscillateurs ($ILO_1$, $ILO_2$, $ILO_3$, $ILO_4$).

**10.** Démodulateur de type BPSK (201, 202) selon la revendication 9, qui comprend en outre un premier mélangeur du type à conversion descendante (M1) pour la multiplication d'un premier couple d'oscillateurs (ILO$_1$, ILO$_3$) dans le but d'obtenir un premier signal de sortie (BHF) et un deuxième mélangeur du type à conversion descendante (M2) pour la multiplication d'un deuxième couple d'oscillateurs (ILO$_2$, ILO$_4$) dans le but d'obtenir un deuxième signal de sortie (BLF), les deux mélangeurs du type à conversion descendante (M1, M2) comprenant un mélangeur (2) et un filtre passe bas (3).

**11.** Démodulateur de type BPSK (201, 202) selon la revendication 10, qui comprend en outre des moyens qui sont destinés à détecter le fait de savoir si l'on se trouve en présence d'une transition binaire dans au moins un des signaux de sortie (BHF, BLF), et si tel est le cas, à déterminer que le type de technique de transition que l'on utilise pour la modulation du signal d'entrée BPSK (10) est :

- une multiplication directe lorsque à la fois le premier signal de sortie (BHF) et le deuxième signal de sortie (BLF) possèdent la transition binaire ;
- une enveloppe constante lorsque seulement un signal parmi le premier signal de sortie (BHF) et le deuxième signal de sortie (BLF) possède la transition binaire.

**12.** Démodulateur de type BPSK (201, 202) selon la revendication 10, qui comprend en outre le fait de multiplier un troisième mélangeur du type à conversion descendante (M3) pour la multiplication d'un troisième couple d'oscillateurs (ILO$_1$, ILO$_4$) dans le but d'obtenir un troisième signal de sortie (BA).

**13.** Démodulateur de type BPSK (201, 202) selon la revendication 12, qui comprend en outre des moyens qui sont destinés à détecter le fait de savoir si l'on se trouve en présence d'une transition binaire dans au moins un des signaux de sortie (BHF, BLF, BA), et si tel est le cas, à déterminer que le type de technique de transition que l'on utilise pour la modulation du signal d'entrée BPSK (10) est :

- une multiplication directe lorsque la totalité des trois signaux de sortie de sortie (BHF, BLF, BA) possèdent la transition binaire ;
- une enveloppe constante lorsque le troisième signal de sortie (BA) plus un des deux premiers signaux de sortie (BHF ou BLF) possèdent la transition binaire.

**14.** Démodulateur de type BPSK **caractérisé par le fait qu'**il comprend :

- un oscillateur local (130) qui travaille à une fréquence de travail (f$_O$) f$_O$ = f$_{HF}$ - f$_{IF}$ avec des sorties en phase et en quadrature de phase (141, 142) qui sont injectées respectivement dans deux mélangeurs du type à conversion descendante (151) à des fins d'extraction, à partir d'un signal QPSK (100) à une haute fréquence (f$_{HF}$), d'un signal BPSK à branche I (101) et d'un signal BPSK branche Q (102), qui représentent des signaux BPSK orthogonaux à une fréquence intermédiaire (f$_{IF}$) ; dans lequel chaque mélangeur du type à conversion descendante (151) comprend un mélangeur de fréquence (152) et un filtre passe bas (152) ;
- un premier démodulateur de type BPSK (201) et un deuxième démodulateur de type BPSK (202) qui sont reliés respectivement aux deux mélangeurs du type à conversion descendante (151), à la fois le premier démodulateur de type BPSK (201) et le deuxième démodulateur de type BPSK (202) étant définis conformément aux revendications 10 à 14 et travaillant à la fréquence intermédiaire (f$_{IF}$) ; dans lequel le signal BPSK à branche I (101) représente le signal d'entrée du premier démodulateur de type BPSK (201) et le signal BPSK à branche Q (102) représente le signal d'entrée du deuxième démodulateur de type BPSK (202).

**FIG. 1**

EP 3 472 989 B1

FIG. 2

BPSK Signal generation

$2\tau_o$

$\tau_o=13$

$\tau_o=12.554$

$\tau_o=12.553$

$\tau_o=12$

$\tau_o=10$

$\tau_o=0$

$3\pi/2$

$\pi$

$\pi/2$

0

$\Delta\phi(t)$ (rad)

0   10   20   30

Normalized time $t/\tau$

# FIG. 3

FIG. 4

**FIG. 5**

EP 3 472 989 B1

**FIG. 6**

EP 3 472 989 B1

**FIG. 7**

EP 3 472 989 B1

**FIG. 8**

**FIG. 9**

**FIG. 10**

FIG. 11

**FIG. 12**

EP 3 472 989 B1

**FIG. 13**

FIG. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060193401 A

- US 20060023809 A

**Non-patent literature cited in the description**

- **LOPEZ-VILLEGAS J M et al.** BPSK TO ASK SIGNAL CONVERSION USING INJECTION-LOCKED OSCILLATORS-PART I: THEORY. *IEEE TRANSACTIONS ON MICROWAVE THEORY AND TECHNIQUES*